(19) Europäisches Patentamt
European Patent Office
Office européen des brevets

(11) EP 4 418 785 A1

(12) EUROPEAN PATENT APPLICATION
published in accordance with Art. 153(4) EPC

(43) Date of publication:
21.08.2024 Bulletin 2024/34

(51) International Patent Classification (IPC):
H04W 72/04 (2023.01)

(21) Application number: 22889443.2

(22) Date of filing: 04.11.2022

(52) Cooperative Patent Classification (CPC):
H04W 72/04; H04W 72/0453; H04W 72/1263;
H04W 72/21; H04W 72/23; H04W 72/53

(86) International application number:
PCT/CN2022/130028

(87) International publication number:
WO 2023/078422 (11.05.2023 Gazette 2023/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.11.2021 CN 202111308863
16.11.2021 CN 202111358112

(71) Applicant: Huawei Technologies Co., Ltd.
Shenzhen, Guangdong 518129 (CN)

(72) Inventors:
• HUA, Meng
Shenzhen, Guangdong 518129 (CN)
• WANG, Yi
Shenzhen, Guangdong 518129 (CN)
• PENG, Jinlin
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) COMMUNICATION METHOD AND APPARATUS

(57) Embodiments of this application provide a communication method and apparatus. The method includes: A terminal device determines first indication information, and sends the first indication information to an access network device, where the first indication information indicates one or two solutions, supported by the terminal device, in a first solution and a second solution, and both the first solution and the second solution are used to: when a first cell and a second cell jointly schedule the first cell, determine at least one of a maximum value of a number of PDCCH candidates that need to be monitored by the terminal device and a maximum value of a number of non-overlapping CCEs in the PDCCH candidates that need to be monitored. According to the foregoing method, the terminal device may indicate, based on the first indication information, solutions supported by the terminal device, and different solutions correspond to different monitoring upper limits, that is, correspond to different maximum values of the number of PDCCH candidates and different maximum values of the number of non-overlapping CCEs. Therefore, the access network device can determine how to configure a corresponding search space for the terminal device.

FIG. 2

**Description**

**CROSS-REFERENCE TO RELATED APPLICATIONS**

This application claims priorities to Chinese Patent Application No. 202111308863.1, filed with the China National Intellectual Property Administration on November 5, 2021 and entitled "COMMUNICATION METHOD AND APPARATUS", and to Chinese Patent Application No. 202111358112.0, filed with the China National Intellectual Property Administration on November 16, 2021 and entitled "COMMUNICATION METHOD AND APPARATUS", both of which are incorporated herein by reference in their entireties.

**TECHNICAL FIELD**

This application relates to the field of communication technologies, and in particular, to a communication method and apparatus.

**BACKGROUND**

In current cross-carrier scheduling, a secondary cell cannot schedule a primary cell in a cross-carrier manner, and there may be only one scheduling cell for one scheduled cell. Due to a high load of the primary cell, that the secondary cell is used to schedule the primary cell is discussed and introduced in a current protocol. In addition, the primary cell may be scheduled by physical downlink control channels (physical downlink control channel, PDCCH) of both the primary cell and the secondary cell. That is, for the primary cell, namely, a scheduled cell, there are two scheduling cells: the secondary cell and the primary cell.

When both the primary cell and the secondary cell can schedule the primary cell, how to determine an actual blind detection (blind detection, BD)/control channel element (control channel element, CCE) monitoring upper limit of a terminal device in the two scheduling cells is an urgent problem to be resolved.

**SUMMARY**

This application provides a communication method and apparatus, to resolve how to determine an upper limit of a number of PDCCH candidates monitored in a time unit and/or an upper limit of a number of non-overlapping CCEs when two cells may jointly schedule one of the two cells.

According to a first aspect, this application provides a communication method. The method includes the following steps:

A terminal device determines first indication information, and sends the first indication information to an access network device, where the first indication information indicates one or two solutions, supported by the terminal device, in a first solution and a second solution, and both the first solution and the second solution are used to: when a first cell and a second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored. The first solution includes: A first parameter and a second parameter are preset in a protocol.

The second solution includes: A first parameter and a second parameter are allowed to be configured by the access network device; or the second solution includes: A first parameter and a second parameter are preset in a protocol, the first parameter preset in the second solution is different from the first parameter preset in the first solution, and/or the second parameter preset in the second solution is different from the second parameter preset in the first solution.

The first parameter and the second parameter are used to determine a first total number, a third total number, a second total number, and a fourth total number.

A first total number and a third total number that correspond to the first solution, and a first total number and a third total number that correspond to the second solution both meet any one of the following:

The first total number is a maximum value, in a time unit corresponding to a first subcarrier spacing, of a sum of a number of physical downlink control channel candidates that need to be monitored by the terminal device in all scheduling cells in which a subcarrier spacing of an active downlink bandwidth part is a first subcarrier spacing and a number of physical downlink control channel candidates that are used to schedule the first cell and that need to be monitored by the terminal device in the second cell; and the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or

the first total number is a maximum value, in a time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing.

A second total number and a fourth total number that correspond to the first solution, and a second total number and a fourth total number that correspond to the second solution both meet any one of the following:

The second total number is a maximum value, in a time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or

the second total number is a maximum value, in a time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, where a subcarrier spacing of the first cell is equal to the first subcarrier spacing, and a subcarrier spacing of the second cell is equal to the second subcarrier spacing.

According to the foregoing method, the terminal device may indicate, based on the first indication information, solutions supported by the terminal device, and different solutions correspond to different monitoring upper limits, that is, correspond to different maximum values of the number of physical downlink control channel candidates and different maximum values of the number of non-overlapping control channel elements in the physical downlink control channel candidates. Therefore, the access network device can determine how to configure a corresponding search space for the terminal device.

In a possible implementation, the terminal device receives third indication information from the access network device, where the third indication information indicates at least one of a value of the first parameter and a value of the second parameter in the second solution.

In a possible implementation, the terminal device receives second indication information from the access network device, where the second indication information indicates to use the first solution or the second solution.

According to the foregoing method, the access network device may clearly indicate, based on the second indication information, a solution to be used, so that the terminal device can accurately determine the maximum value of the number of physical downlink control channel candidates that need to be monitored and the maximum value of the number of non-overlapping control channel elements.

In a possible implementation, when the first cell and the second cell jointly schedule the first cell, the terminal device determines, based on the solution indicated by the second indication information, at least one of the maximum value of the number of physical downlink control channel candidates that need to be monitored and the maximum value of the number of non-overlapping control channel elements in the physical downlink control channel candidates that need to be monitored.

According to a second aspect, this application provides a control channel transmission method. The method includes the following steps:

An access network device receives first indication information from a terminal device, where the first indication information indicates one or two solutions, supported by the terminal device, in a first solution and a second solution;

and

the access network device separately determines configurations of search space sets of a first cell and a second cell based on the first solution or the second solution.

With reference to the first aspect or the second aspect, in a possible implementation:
Both the first solution and the second solution are used to: when the first cell and the second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored.

The first solution includes: A first parameter and a second parameter are preset in a protocol.

The second solution includes: A first parameter and a second parameter are allowed to be configured by the access network device; or the second solution includes: A first parameter and a second parameter are preset in a protocol, the first parameter preset in the second solution is different from the first parameter preset in the first solution, and/or the second parameter preset in the second solution is different from the second parameter preset in the first solution.

The first parameter and the second parameter are used to determine a first total number, a third total number, a second total number, and a fourth total number.

A first total number and a third total number that correspond to the first solution, and a first total number and a third total number that correspond to the second solution both meet any one of the following:

The first total number is a maximum value, in a time unit corresponding to a first subcarrier spacing, of a sum of a number of physical downlink control channel candidates that need to be monitored by the terminal device in all scheduling cells in which a subcarrier spacing of an active downlink bandwidth part is a first subcarrier spacing and a number of physical downlink control channel candidates that are used to schedule the first cell and that need to be monitored by the terminal device in the second cell; and the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or
the first total number is a maximum value, in a time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing.

A second total number and a fourth total number that correspond to the first solution, and a second total number and a fourth total number that correspond to the second solution both meet any one of the following:

The second total number is a maximum value, in a time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or
the second total number is a maximum value, in a time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, where

a subcarrier spacing of the first cell is equal to the first subcarrier spacing, and a subcarrier spacing of the second cell is equal to the second subcarrier spacing.

With reference to the first aspect or the second aspect, in a possible implementation, the first solution further includes at least one of the following:

A maximum value, in a time unit corresponding to the second subcarrier spacing, of a number of physical downlink control channel candidates that are used to schedule the first cell and that need to be monitored by the terminal device in the second cell is determined based on a first number, where the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell is not determined based on a first number, where the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell may be greater than a first number, where the first number is a preset maximum value of a number of physical downlink control channel candidates that need to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is determined based on a second number, where the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is not determined based on a second number, where the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell may be greater than a second number, where the second number is a preset maximum value of a number of non-overlapping control channel elements in the physical downlink control channel candidate that needs to be monitored in the time unit corresponding to the second subcarrier spacing;

a maximum value, in a time unit corresponding to the first subcarrier spacing, of a number of physical downlink control channel candidates that are used to schedule the first cell and that need to be monitored by the terminal device in the first cell is obtained by multiplying a minimum value of a third number and the first total number by a third parameter, where the third number is a preset maximum value of a number of physical downlink control channel candidates that need to be monitored in the time unit corresponding to the first subcarrier spacing, and the third parameter is allowed to be configured by the access network device;

a maximum value, in a time unit corresponding to the first subcarrier spacing, of a number of non-overlapping control channel elements in the physical downlink control channel candidates that are used to schedule the first cell and that need to be monitored by the terminal device in the first cell is obtained by multiplying a minimum value of a fourth number and the second total number by the third parameter, where the fourth number is a preset maximum value of a number of non-overlapping control channel elements in the physical downlink control channel candidates that need to be monitored in the time unit corresponding to the first subcarrier spacing;

a maximum value, in a time unit corresponding to the first subcarrier spacing, of a number of physical downlink control channel candidates that are used to schedule the first cell and that need to be monitored by the terminal device in the second cell is obtained by multiplying a minimum value of the third number and the first total number by a difference between 1 and the third parameter, where the third number is the preset maximum value of the number of physical downlink control channel candidates that need to be monitored in the time unit corresponding to the first subcarrier spacing, and the third parameter is allowed to be configured by the access network device;

a maximum value, in a time unit corresponding to the first subcarrier spacing, of a number of non-overlapping control channel elements in the physical downlink control channel candidates that are used to schedule the first cell and that need to be monitored by the terminal device in the second cell is obtained by multiplying a minimum value of the fourth number and the second total number by the difference between 1 and the third parameter, where the fourth number is the preset maximum value of the number of non-overlapping control channel elements in the physical downlink control channel candidates that need to be monitored in the time unit corresponding to the first subcarrier spacing;

all search spaces in the second cell that is used to schedule the first cell are configured within three consecutive symbols of a time unit corresponding to the first subcarrier spacing;

all search spaces in the first cell and the second cell that are used to schedule the first cell are configured within three consecutive symbols of a time unit corresponding to the first subcarrier spacing, where in this manner, PDCCH monitoring of two scheduling cells can be implemented by using PDCCH monitoring resources of one cell; or

all search spaces in the second cell that is used to schedule the first cell are configured within three consecutive symbols of a time unit corresponding to the second subcarrier spacing. In this manner, the search spaces are limited to the three consecutive symbols of a time unit corresponding to the second subcarrier spacing, to reduce a storage space required when the terminal device monitors a PDCCH candidate.

With reference to the first aspect or the second aspect, in a possible implementation, the second solution further includes at least one of the following:

The maximum value, in the time unit corresponding to the second subcarrier spacing, of the number of physical downlink control channel candidates that are used to schedule the first cell and that need to be monitored by the terminal device in the second cell is determined based on the first number and the second total number, where the first number is the preset maximum value of the number of physical downlink control channel candidates that need to be monitored in the time unit corresponding to the second subcarrier spacing; or

the maximum value, in the time unit corresponding to the second subcarrier spacing, of the number of non-overlapping control channel elements in the physical downlink control channel candidate that needs to be monitored by the terminal device in the second cell is determined based on the second number and the fourth total number, where the second number is the preset maximum value of the number of non-overlapping control channel elements in the physical downlink control channel candidate that needs to be monitored in the time unit corresponding to the second subcarrier spacing.

A maximum value, in a time unit corresponding to the first subcarrier spacing, of a number of physical downlink control channel candidates that are used to schedule the first cell and that need to be monitored by the terminal device in the first cell is obtained by multiplying a third number by a third parameter, where the third number is a preset maximum value of a number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the first cell is obtained by multiplying a fourth number by the third parameter, where the fourth number is a preset maximum value of a number of non-overlapping control channel elements in the physical downlink control channel candidates that need to be monitored in the time unit corresponding to the first subcarrier spacing.

A maximum value, in a time unit corresponding to the first subcarrier spacing, of a number of physical downlink control channel candidates that are used to schedule the first cell and that need to be monitored by the terminal device in the second cell is obtained by multiplying the third number by a difference between 1 and the third parameter, where the third number is the preset maximum value of the number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the second cell is obtained by multiplying the fourth number by the difference between 1 and the third parameter, where the fourth number is the preset maximum value of the number of non-overlapping control channel elements in the physical downlink control channel candidates that need to be monitored in the time unit corresponding to the first subcarrier spacing.

With reference to the first aspect or the second aspect, in a possible implementation, in the first solution, a preset value of the first parameter is 1, and a preset value of the second parameter is 0.

In a possible implementation, the access network device sends third indication information to the terminal device, where the third indication information indicates at least one of a value of the first parameter and a value of the second parameter in the second solution.

With reference to the first aspect or the second aspect, in a possible implementation, a sum of a value of the first parameter and a value of the second parameter is 1 in the second solution.

With reference to the first aspect or the second aspect, in a possible implementation, a maximum value, in a time unit corresponding to the first subcarrier spacing, of a number of physical downlink control channel candidates that are used to schedule the first cell and that need to be monitored by the terminal device in the first cell is obtained by multiplying a minimum value of a third number and the first total number by a third parameter, where the third number is a preset maximum value of a number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the first cell is obtained by multiplying a minimum value of a fourth number and the second total number by the third parameter, where the fourth number is a preset maximum value of a number of non-overlapping control channel elements in the physical downlink control channel candidates that need to be monitored in the time unit corresponding to the first subcarrier spacing.

With reference to the first aspect or the second aspect, in a possible implementation, a maximum value, in a time unit corresponding to the first subcarrier spacing, of a number of physical downlink control channel candidates that are used to schedule the first cell and that need to be monitored by the terminal device in the second cell is obtained by multiplying a minimum value of the third number and the first total number by a difference between 1 and the third parameter, where the third number is the preset maximum value of the number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the second cell is obtained by multiplying a minimum value of the fourth number and the second total number by the difference between 1 and the third parameter, where the fourth number is the preset maximum value of the number of non-overlapping control channel elements in the physical downlink control channel candidates that need to be monitored in the time unit corresponding to the first subcarrier spacing.

In a possible implementation, the method further includes: The access network device sends second indication information to the terminal device, where the second indication information indicate to use the first solution or the second solution.

According to a third aspect, this application further provides a communication apparatus. The communication apparatus can implement any method or any implementation provided in the first aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor, and the processor is configured to support the communication apparatus in performing the method according to the first aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to descriptions in the first aspect. Details are not described herein again.

According to a fourth aspect, this application further provides a communication apparatus. The communication apparatus can implement any method or any implementation provided in the second aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor, and the processor is configured to support the communication apparatus in performing the method in the second aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the method examples. For details, refer to descriptions in the method in the second aspect. Details are not described herein.

According to a fifth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in a memory, to implement the method in any possible implementation of the first aspect. Optionally, the apparatus further includes the memory, and the memory stores the computer program or the instructions.

According to a sixth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in a memory, to implement the method in any possible implementation of the second aspect. Optionally, the apparatus further includes the memory, and the memory stores the computer program or the instructions.

According to a seventh aspect, a chip is provided. The chip includes a processor, and may further include a memory. The processor is coupled to the memory, and is configured to execute a computer program or instructions stored in the memory, to enable the chip to implement the method in any possible implementation of the first aspect.

According to an eighth aspect, a chip is provided. The chip includes a processor, and may further include a memory. The processor is coupled to the memory, and is configured to execute a computer program or instructions stored in the memory, to enable the chip to implement the method in any possible implementation of the second aspect.

According to a ninth aspect, a computer-readable storage medium is provided. The computer-readable storage medium stores a computer program or instructions. When the computer program or the instructions are run on a computer, the computer is enabled to implement the method in any possible implementation of the first aspect.

According to a tenth aspect, a computer-readable storage medium is provided. The computer-readable storage medium stores a computer program or instructions. When the computer program or the instructions are run on a computer, the computer is enabled to implement the method in any possible implementation of the second aspect.

According to an eleventh aspect, a computer program product including computer-readable instructions is provided. When the computer-readable instructions are run on a computer, the computer is enabled to implement the method in any possible implementation of the first aspect.

According to a twelfth aspect, a computer program product including computer-readable instructions is provided. When the computer-readable instructions are run on a computer, the computer is enabled to implement the method in any possible implementation of the second aspect.

According to a thirteenth aspect, a communication system is provided. The system includes the apparatus (such as a terminal device) for implementing the first aspect and the apparatus (such as an access network device) for implementing the second aspect.

## BRIEF DESCRIPTION OF DRAWINGS

FIG. 1 is a diagram of an architecture of a communication system to which this application may be applied;
FIG. 2 is a schematic flowchart of a communication method according to an embodiment of this application;
FIG. 3 is a diagram of a structure of a communication apparatus according to an embodiment of this application;
FIG. 4 is a diagram of a structure of a communication apparatus according to an embodiment of this application; and
FIG. 5 is a schematic flowchart of a communication method according to an embodiment of this application.

## DESCRIPTION OF EMBODIMENTS

The following describes in detail embodiments of this application with reference to accompanying drawings of the specification.

Technical solutions of this application may be applied to various communication systems, for example, a new radio (new radio, NR) system, a long term evolution (long term evolution, LTE) system, or a next-generation mobile communication system. This is not limited herein.

In this application, a terminal device may be referred to as a terminal for short. The terminal device may communicate with one or more core networks through a radio access network (radio access network, RAN). The terminal device may be a device having a wireless transceiver function or a chip that can be disposed in the device. The terminal device may also be referred to as user equipment (user equipment, UE), an access terminal, a subscriber unit, a subscriber station, a mobile station, a remote station, a remote terminal, a mobile device, a user terminal, a wireless communication device, a user agent, a user apparatus, or the like. The terminal device in this application may be a mobile phone (mobile phone), a tablet computer (pad), a computer with a wireless transceiver function, a virtual reality (virtual reality, VR) terminal, an augmented reality (augmented reality, AR) terminal, a wearable device, a vehicle, an uncrewed aerial vehicle, a helicopter, an airplane, a ship, a robot, a robot arm, a smart home device, or the like. The terminal device in this application may be widely used in communication in various scenarios, for example, including but not limited to at least one of the following scenarios: enhanced mobile broadband (enhanced mobile broadband, eMBB), ultra-reliable and low-latency communication (ultra-reliable low-latency communication, URLLC), device-to-device (device-to-device, D2D), vehicle to everything (vehicle to everything, V2X), machine-type communication (machine-type communication, MTC), massive machine-type communication (massive machine-type communication, mMTC), an internet of things (internet of things, IoT), virtual reality, augmented reality, industrial control, autonomous driving, remote medical, a smart grid, smart furniture, smart office, smart wearable, smart transportation, a smart city, or the like. A specific technology and a specific device form that are used by the terminal are not limited in embodiments of this application.

An access network device may be a base station (base station), a NodeB (NodeB), an evolved NodeB (evolved NodeB, eNodeB), a transmission reception point (transmission reception point, TRP), a next-generation NodeB (next generation NodeB, gNB) in a 5th generation (5th generation, 5G) mobile communication system, an access network device in an open radio access network (open radio access network, O-RAN or open RAN), a next-generation base station in a 6th generation (6th generation, 6G) mobile communication system, a base station in a future mobile communication system, an access node in a wireless fidelity (wireless fidelity, Wi-Fi) system, or the like; or the access network device may be a module or unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form used by the access network device are not limited in embodiments of this application.

In this application, interaction between the terminal device and the access network device is used as an example for description. It should be noted that the method provided in this application not only may be applied to interaction between the terminal device and a network side, but also may be applied to interaction between any two devices. This is not limited in this application.

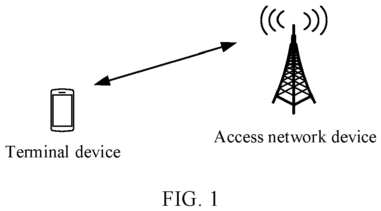

FIG. 1 is a diagram of an architecture of a communication system to which this application may be applied. The communication system includes an access network device and a terminal device. The terminal device may establish a connection to the access network device, and communicate with the access network device. FIG. 1 is merely a diagram, and a number of access network devices and a number of terminal devices included in the communication system are not limited in this application.

The access network device and the terminal device may be deployed on land, including an indoor or outdoor device, a handheld device, or a vehicle-mounted device; may be deployed on water; or may be deployed on a plane, a balloon, or a satellite in the air. Application scenarios of the access network device and the terminal device are not limited in embodiments of this application.

Embodiments of this application are applicable to downlink signal transmission, uplink signal transmission, or device-to-device (device to device, D2D) signal transmission. In downlink signal transmission, a sending device is an access network device, and a corresponding receiving device is a terminal device. In uplink signal transmission, a sending device is a terminal device, and a corresponding receiving device is an access network device. In D2D signal transmission, a sending device is a terminal device, and a corresponding receiving device is also a terminal device. A signal transmission direction is not limited in embodiments of this application.

Communication between the access network device and the terminal device and communication between terminal devices may be performed by using a licensed spectrum (licensed spectrum), an unlicensed spectrum (unlicensed spectrum), or both a licensed spectrum and an unlicensed spectrum. Communication between the access network device and the terminal device and communication between terminal devices may be performed by using a spectrum below 6 G, a spectrum above 6 G, or both a spectrum below 6 G and a spectrum above 6 G. Spectrum resources used between the access network device and the terminal device are not limited in embodiments of this application.

For ease of understanding this application, technical terms that may be used in this application are first described.

Primary cell and secondary cell: A terminal device may establish connections to a plurality of cells, and these cells are classified into two groups: a master cell group (master cell group, MCG) and a secondary cell group (secondary cell group, SCG). The MCG includes one primary cell, and may further include one or more secondary cells. Similarly, the SCG includes one primary cell, and may further include one or more secondary cells. Unless otherwise specified, a primary cell may be a primary cell in an MCG or a primary cell in an SCG.

A span may be translated into a "time span", a "time unit", a "time subunit", or the like, and is a group of consecutive orthogonal frequency division multiplexing (orthogonal frequency-division multiplexing, OFDM) symbols in one slot. Any PDCCH monitoring occasion (monitoring occasion) supported by the terminal device is included in a span. A start symbol of one span is a start symbol of a PDCCH monitoring occasion, an end symbol of the span is an end symbol of a PDCCH monitoring occasion, and a maximum number of symbols of one span is Y If a terminal device performs PDCCH monitoring in a cell by using a combination (X, Y), a minimum value of an interval between start symbols of two consecutive spans is X symbols, and the two consecutive spans may be within a same slot or between slots.

Subcarrier spacing (subcarrier spacing, SCS): There are five subcarrier spacings in the NR system, a value of a configuration parameter $\mu$ of a subcarrier spacing ranges from 0 to 4, and corresponding subcarrier spacings are 15 kHz, 30 kHz, 60 kHz, 120 kHz, and 240 kHz respectively.

Cell and carrier: A cell is described from a perspective of resource management or mobility management by a higher layer (which is a protocol layer above a physical layer, for example, a radio resource control layer or a media access control layer). Coverage of each network device may be divided into one or more cells. In the NR system, one downlink carrier may be configured for one cell, and optionally, at least one uplink carrier is further configured for the cell. A cell is a general name, and for a terminal device, a cell that provides a service for the terminal device is referred to as a serving cell. The cell in this application may alternatively be a serving cell.

Cross-carrier scheduling: Data in a cell is scheduled by using a PDCCH in the cell, which is referred to as self-scheduling; and data in a cell is scheduled by using a PDCCH in another cell, which is referred to as cross-carrier scheduling. In cross-carrier scheduling, a cell carrying a PDCCH is referred to as a primary scheduling cell or a scheduling cell (scheduling cell), and a cell carrying data is referred to as a scheduled cell (scheduled cell).

In a system such as the NR system, a terminal device monitors a group of PDCCH candidates (candidates) on a downlink active bandwidth part (bandwidth part, BWP) on which a PDCCH is configured. Monitoring (monitor) means performing PDCCH decoding on each PDCCH candidate based on a format (format) of to-be-detected downlink control information (downlink control information, DCI). An access network device may or may not send a PDCCH in a PDCCH candidate. Therefore, a monitoring result of the terminal device may be detecting (detect) a PDCCH or not detecting a PDCCH.

One PDCCH candidate may include L={ 1, 2, 4, 8, 16} control channel elements (control channel element, CCE). Herein, L is referred to as an aggregation level (aggregation level, AL) of a PDCCH. One CCE includes six resource element groups (resource-element group, REG), and each REG corresponds to one resource block (resource block, RB) on one orthogonal frequency division multiplexing (orthogonal frequency-division multiplexing, OFDM) symbol (symbol). In this application, an OFDM symbol may be referred to as a symbol for short.

A search space (search space) with an L AL is defined as a set of PDCCH candidates including several control channel elements whose sizes are L. A search space set (search space set) is a set of search spaces including different ALs. One search space set is associated with one control resource set (control resource set, CORESET).

Two tasks in PDCCH monitoring have great impact on implementation complexity of the terminal device. One task is a number of monitored PDCCH candidates, which is sometimes referred to as a number of blind detections (blind detection, BD). The other task is a number of non-overlapping control channel elements (control channel element, CCE), which is sometimes referred to as a number of CCEs. CCEs that are associated with a same CORESET and whose time-frequency resources overlap are considered as overlapping CCEs, and other CCEs are considered as non-overlapping CCEs. A larger number of PDCCH candidates that need to be monitored by the terminal device indicates higher decoding complexity of the terminal device, and a larger number of non-overlapping CCEs in the PDCCH candidates indicates higher channel estimation complexity of the terminal device.

An upper limit of a number of PDCCH candidates monitored by the terminal device in a cell in a time unit and an upper limit of a number of non-overlapping CCEs, namely, a BD/CCE upper limit, are preset in a protocol. The time unit herein may be a slot (slot), or may be a time span (span).

The access network device configures a PDCCH monitoring capability configuration (PDCCHMonitoringCapabilityConfig) for each serving cell of the terminal device. There are two values of this parameter, that is, an R15 PDCCH monitoring capability (R15 PDCCH monitoring capability) defined in the 3rd generation partnership project (the 3rd generation partnership project, 3GPP) release 15 (release 15, R15) and an R16 PDCCH monitoring capability (R16 PDCCH monitoring capability) defined in the 3GPP R16.

If *PDCCHMonitoringCapabilityConfig* of a serving cell=R15 PDCCH monitoring capability, or no *PDCCHMonitoringCapabilityConfig* is configured in the serving cell, when a configuration parameter of a subcarrier spacing of a BWP of the serving cell is $\mu \in \{0, 1, 2, 3\}$, a maximum number of PDCCH candidates monitored by the terminal device in the serving cell in each slot is $M_{PDCCH}^{max,slot,\mu}$, and a maximum number of non-overlapping CCEs in the monitored PDCCH candidates is $C_{PDCCH}^{max,slot,\mu}$. For details, refer to Table 1 and Table 2.

Table 1. Maximum number $M_{PDCCH}^{max,slot,\mu}$ of monitored PDCCH candidates per slot for a BWP with an SCS configuration $\mu \in \{0, 1, 2, 3\}$ for a single serving cell

| $\mu$ | $M_{PDCCH}^{max,slot,\mu}$ |
| --- | --- |
| 0 | 44 |
| 1 | 36 |
| 2 | 22 |
| 3 | 20 |

Table 2. Maximum number $C_{PDCCH}^{max,slot,\mu}$ of non-overlapping CCEs per slot for a BWP with an SCS configuration $\mu \in \{0, 1, 2, 3\}$ for a single serving cell

| $\mu$ | $C_{PDCCH}^{max,slot,\mu}$ |
| --- | --- |
| 0 | 56 |
| 1 | 56 |
| 2 | 48 |
| 3 | 32 |

If *PDCCHMonitoringCapabilityConfig* of a serving cell=R16 PDCCH monitoring capability, a maximum number of PDCCH candidates monitored by the terminal device in the serving cell in each time span is $M_{PDCCH}^{max,(X,Y),\mu}$, and a maximum number of non-overlapping CCEs in the monitored PDCCH candidates is $C_{PDCCH}^{max,(X,Y),\mu}$. For details, refer to Table 3 and Table 4.

Table 3. Maximum number $M_{PDCCH}^{max,(X,Y),\mu}$ of monitored PDCCH candidates in a span for a combination (X, Y) for a BWP with an SCS configuration pc {0,1} for a single serving cell

| | $M_{PDCCH}^{max,(X,Y),\mu}$ | | |
| --- | --- | --- | --- |
| $\mu$ | (2, 2) | (4, 3) | (7, 3) |
| 0 | 14 | 28 | 44 |
| 1 | 12 | 24 | 36 |

Table 4. Maximum number $C_{PDCCH}^{max,(X,Y),\mu}$ of non-overlapping CCEs in a span for a combination (X, Y) for a BWP with an SCS configuration $\mu \in \{0,1\}$ for a single serving cell

| | $C_{PDCCH}^{max,(X,Y),\mu}$ | | |
| --- | --- | --- | --- |
| $\mu$ | (2, 2) | (4, 3) | (7, 3) |
| 0 | 18 | 36 | 56 |

(continued)

| $\mu$ | (2, 2) | (4, 3) | (7, 3) |
|---|---|---|---|
| 1 | 18 | 36 | 56 |

Table 1 to Table 4 specify an upper limit of a number of PDCCH candidates monitored by the terminal device in a cell in a time unit and an upper limit of a number of non-overlapping CCEs. However, an actual detection capability of the terminal device may be less than a number specified in the foregoing tables. For example, in the following four scenarios, the terminal device may separately determine an upper limit of a number of PDCCH candidates that actually need to be monitored in a cell in a time unit and an upper limit of a number of non-overlapping CCEs.

Scenario 1:

Blind detection capability of UE is a UE capability represented in a form of a number of cells. For example, the terminal device may report a blind detection capability of supporting four cells, or report a blind detection capability of supporting six cells. After a span is introduced in R16, that is, after monitoringCapabilityConfig-r16 is introduced, the terminal device separately reports a slot-based blind detection capability and a span-based blind detection capability. For example, the terminal device may report that M slot-based blind detection capabilities are supported, and N span-based blind detection capabilities are supported.

If monitoringCapabilityConfig-r16 is not configured for a terminal device, or a number of cells for which monitoringCapabilityConfig-r16=R15 monitoring capability is configured is less than or equal to a corresponding blind detection capability (that is, a slot-based blind detection capability) of the terminal device, in a scheduling cell in which a subcarrier spacing of an active downlink BWP is $\mu$:

- when no two *CORESETPoolIndexes* are configured for the scheduling cell, for each scheduled cell, in each slot of the scheduling cell, the terminal device needs to monitor no more than $M_{PDCCH}^{max,slot,\mu}$ PDCCH candidates, and also needs to monitor no more than $C_{PDCCH}^{max,slot,\mu}$ non-overlapping CCEs;

- when two *CORESETPoolIndexes* are configured for the scheduling cell, for each scheduled cell, in each slot of the scheduling cell, the terminal device needs to monitor no more than $M_{PDCCH}^{total,slot,\mu} = \gamma \cdot M_{PDCCH}^{max,slot,\mu}$ PDCCH candidates, and also needs to monitor no more than $C_{PDCCH}^{total,slot,\mu} = \gamma \cdot C_{PDCCH}^{max,slot,\mu}$ non-overlapping CCEs, where $\gamma$ is a parameter configured by a base station, and a value of $\gamma$ may be 1 or 2; and

- when two *CORESETPoolIndexes* are configured for the scheduling cell, for each scheduled cell, in CORESETs with a same *CORESETPoolIndex* value in each slot of the scheduling cell, the terminal device needs to monitor no more than $M_{PDCCH}^{max,slot,\mu}$ PDCCH candidates, and also needs to monitor no more than $C_{PDCCH}^{max,slot,\mu}$ non-overlapping CCEs.

Scenario 2:

If monitoringCapabilityConfig-r16 is not configured for a terminal device, or a number of cells for which monitoringCapabilityConfig-r16=R15 monitoring capability is configured is greater than a corresponding blind detection capability of UE,

- in all scheduling cells in which a subcarrier spacing of an active downlink BWP is $\mu$, in each slot, the terminal device needs to monitor no more than $M_{PDCCH}^{total,slot,\mu}$ PDCCH candidates, and also needs to monitor no more than $C_{PDCCH}^{total,slot,\mu}$ non-overlapping CCEs, where

$$M_{PDCCH}^{total,slot,\mu} = \left\lfloor \frac{\text{Number of cells corresponding to } \mu}{\text{Number of cells corresponding to all subcarrier spacings}} \cdot M_{PDCCH}^{max,slot,\mu} \cdot \text{UE capability} \right\rfloor,$$

$$C_{PDCCH}^{total,slot,\mu} = \left\lfloor \frac{\text{Number of cells corresponding to } \mu}{\text{Number of cells corresponding to all subcarrier spacings}} \cdot C_{PDCCH}^{max,slot,\mu} \cdot \text{UE capability} \right\rfloor,$$

the UE capability is a number of cells in which the terminal device supports blind detection, and in the following formula, if the "UE capability" appears, a same meaning is expressed;

- when no two *CORESETPoolIndexes* are configured for a scheduling cell, for each scheduled cell, in each slot of the scheduling cell in which a subcarrier spacing of an active downlink BWP is $\mu$, the terminal device needs to monitor no more than $\min\left(M_{PDCCH}^{max,slot,\mu}, M_{PDCCH}^{total,slot,\mu}\right)$ PDCCH candidates, and also needs to monitor no more than $\min\left(C_{PDCCH}^{max,slot,\mu}, C_{PDCCH}^{total,slot,\mu}\right)$ non-overlapping CCEs;

- when two *CORESETPoolIndexes* are configured for a scheduling cell, for each scheduled cell, in each slot of the scheduling cell in which a subcarrier spacing of an active downlink BWP is $\mu$, the terminal device needs to monitor no more than $\min\left(\gamma \cdot M_{PDCCH}^{max,slot,\mu}, M_{PDCCH}^{total,slot,\mu}\right)$ PDCCH candidates, and also needs to monitor no more than $\min\left(\gamma \cdot C_{PDCCH}^{max,slot,\mu}, C_{PDCCH}^{total,slot,\mu}\right)$ non-overlapping CCEs, where $\gamma$ is a parameter configured by a base station, and a value of $\gamma$ may be 1 or 2; and

- when two *CORESETPoolIndexes* are configured for a scheduling cell, for each scheduled cell, in CORESETs with a same *CORESETPoolIndex* value in each slot of the scheduling cell in which a subcarrier spacing of an active downlink BWP is $\mu$, the terminal device needs to monitor no more than $\min\left(M_{PDCCH}^{max,slot,\mu}, M_{PDCCH}^{total,slot,\mu}\right)$ PDCCH candidates, and also needs to monitor no more than $\min\left(C_{PDCCH}^{max,slot,\mu}, C_{PDCCH}^{total,slot,\mu}\right)$ non-overlapping CCEs.

Scenario 3:

If a number of cells for which monitoringCapabilityConfig-r16=R16 monitoring capability is configured for a terminal device is less than or equal to a corresponding UE capability (that is, a span-based blind detection capability), in a scheduling cell in which PDCCH monitoring is performed by using a combination $(X, Y)$ and in which a subcarrier spacing of an active downlink BWP is $\mu$:

- for each scheduled cell, on each span of the scheduling cell, the terminal device needs to monitor no more than $M_{PDCCH}^{max,(X,Y),\mu}$ PDCCH candidates, and also needs to monitor no more than $C_{PDCCH}^{max,(X,Y),\mu}$ non-overlapping CCEs.

Scenario 4:

If a number of cells for which monitoringCapabilityConfig-r16=R16 monitoring capability is configured for a terminal device is greater than a corresponding UE capability,

- in one span group, the terminal device needs to monitor no more than $M_{PDCCH}^{total,(X,Y),\mu}$ PDCCH candidates, and also needs to monitor no more than $C_{PDCCH}^{total,(X,Y),\mu}$ non-overlapping CCEs, where

$$M_{PDCCH}^{total,(X,Y),\mu} = \left\lfloor \frac{\text{Number of cells corresponding to } (X,Y) \text{ and } \mu}{\text{Number of cells corresponding to all subcarrier spacings}} \cdot M_{PDCCH}^{max,(X,Y),\mu} \cdot \text{UE capability} \right\rfloor$$

, and

$$C_{PDCCH}^{total,(X,Y),\mu} = \left\lfloor \frac{\text{Number of cells corresponding to } (X,Y) \text{ and } \mu}{\text{Number of cells corresponding to all subcarrier spacings}} \cdot C_{PDCCH}^{max,(X,Y),\mu} \cdot \text{UE capability} \right\rfloor;$$

- if for all scheduling cells in which PDCCH monitoring is performed by using the combination (X,Y) and in which a subcarrier spacing of an active downlink BWP is $\mu$, any span pair in each X symbol falls within Y symbols, a start symbol of a first X symbol herein falls within a PDCCH monitoring opportunity, and a start symbol of a next X symbol falls within a PDCCH monitoring opportunity and does not belong to the first X symbol, a span group is a span group including all spans in X symbols;
  - otherwise, the span group is any span group including a maximum of one span in all scheduling cells in which PDCCH monitoring is performed by using the combination (X,Y) and in which a subcarrier spacing of an active downlink BWP is $\mu$; and

- in a scheduling cell in which PDCCH monitoring is performed by using the combination (X,Y) and in which a subcarrier spacing of an active downlink BWP is $\mu$, for each scheduled cell, on each span of the scheduling cell, the terminal device needs to monitor no more than $\min\left(M_{PDCCH}^{max,(X,Y),\mu}, M_{PDCCH}^{total,(X,Y),\mu}\right)$ PDCCH candidates, and also needs to monitor no more than $\min\left(C_{PDCCH}^{max,(X,Y),\mu}, C_{PDCCH}^{total,(X,Y),\mu}\right)$ non-overlapping CCEs.

The foregoing scenario 1 to scenario 4 describe how to determine an upper limit of a number of PDCCH candidates monitored in a time unit of a scheduling cell and an upper limit of a number of non-overlapping CCEs in a case in which there may be only one scheduling cell for one scheduled cell. However, if two cells can jointly schedule one of the two cells, for example, a first cell and a second cell jointly schedule the first cell, how to determine an upper limit of a number of PDCCH candidates monitored in a time unit and an upper limit of a number of non-overlapping CCEs is an urgent problem to be resolved. This application provides a method to resolve the foregoing problem.

The network architecture and the service scenario described in embodiments of this application are intended to describe technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

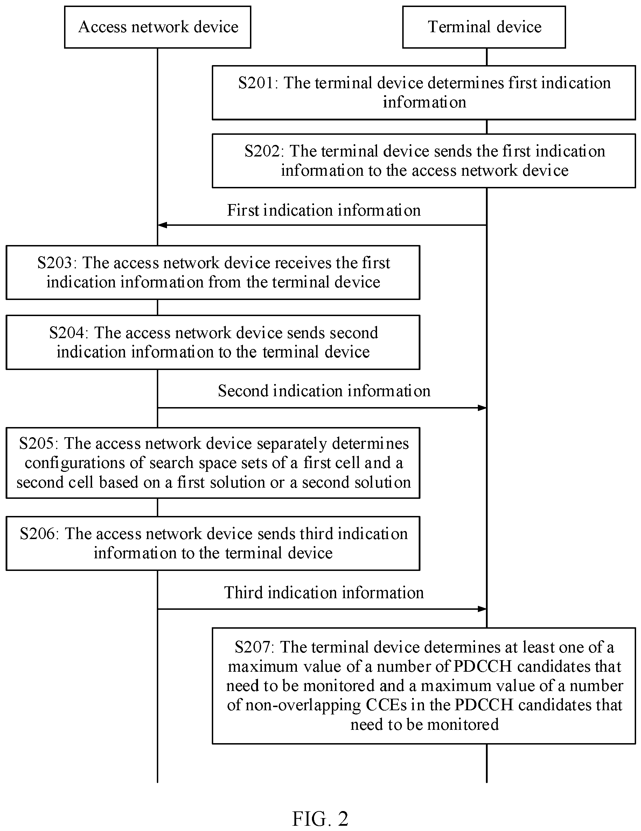

FIG. 2 is a schematic flowchart of a communication method according to an embodiment of this application. The method includes the following steps.

S201: A terminal device determines first indication information.

S202: The terminal device sends the first indication information to an access network device.

S203: The access network device receives the first indication information from the terminal device.

The first indication information indicates one or two solutions, supported by the terminal device, in the first solution and the second solution. Both the first solution and the second solution are used to: when a first cell and a second cell jointly schedule the first cell, determine at least one of a maximum value of a number of PDCCH candidates that need to be monitored by the terminal device and a maximum value of a number of non-overlapping CCEs in the PDCCH candidates that need to be monitored.

Specifically, the first solution or the second solution may be used to determine at least one of a maximum value, in a time unit corresponding to a second subcarrier spacing, of a number of PDCCH candidates that need to be monitored by the terminal device in the second cell and a maximum value of a number of non-overlapping CCEs in the PDCCH candidates that need to be monitored.

In this application, a subcarrier spacing of the first cell is equal to a first subcarrier spacing, a subcarrier spacing of the second cell is equal to the second subcarrier spacing, and the first subcarrier spacing may not be equal to the second subcarrier spacing. For example, the first subcarrier spacing may be less than the second subcarrier spacing. For example, the first subcarrier spacing is 15 kHz, and the second subcarrier spacing is 30 kHz.

In this application, a time unit may be a slot, or may be a span. The first cell and the second cell are not limited. For example, the first cell is a primary cell, and the second cell is a secondary cell.

In this application, the first solution may include at least one of the following.

Condition 1-1: A first parameter and a second parameter are preset. For example, a preset value of the first parameter is 1, and a preset value of the second parameter is 0.

Condition 1-2: When $M_{PDCCH}^{total,slot,\mu1}$, $C_{PDCCH}^{total,slot,\mu1}$, $M_{PDCCH}^{total,slot,\mu2}$, and $C_{PDCCH}^{total,slot,\mu2}$ are determined, $N_{cells,0}^{DL,\mu1}$ scheduled cells include the first cell, and $N_{cells,0}^{DL,\mu2}$ scheduled cells do not include the first cell; or $N_{cells,0}^{DL,\mu1}$ scheduling cells include the first cell, and $N_{cells,0}^{DL,\mu2}$ scheduling cells do not include the second cell that is used as a scheduling cell of the first cell, that is, the second cell is not counted in $N_{cells,0}^{DL,\mu2}$ because the second cell is the scheduling cell of the first cell. $\mu1$ is a configuration parameter corresponding to the subcarrier spacing of the first cell, namely, a configuration parameter corresponding to the first subcarrier spacing, and $\mu2$ is a configuration parameter corresponding to the subcarrier spacing of the second cell, namely, a configuration parameter corresponding to the second subcarrier spacing. When the $N_{cells,0}^{DL,\mu1}$ scheduled cells include the first cell, a count of the first cell is 1, and when the $N_{cells,0}^{DL,\mu2}$ scheduled cells do not include the first cell, a count of the first cell is 0.

Condition 1-3: The terminal device determines a first total number, where the first total number is a maximum value, in a time unit corresponding to the first subcarrier spacing, of a sum of a number of physical downlink control channel candidates that need to be monitored by the terminal device in all scheduling cells in which a subcarrier spacing of an active downlink bandwidth part is the first subcarrier spacing and a number of physical downlink control channel candidates that are used to schedule the first cell and that need to be monitored by the terminal device in the second cell.

Condition 1-4: The terminal device determines a third total number, where the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell.

Condition 1-5: A maximum value, in a time unit corresponding to the second subcarrier spacing, of a number of PDCCH candidates that are used to schedule the first cell and that need to be monitored by the terminal device in the second cell is determined based on a first number, where the first number is a preset maximum value of a number of PDCCH candidates that need to be monitored in the time unit corresponding to the second subcarrier spacing. For example, the maximum value, in a time unit corresponding to the second subcarrier spacing, of the number of PDCCH candidates that are used to schedule the first cell and that need to be monitored by the terminal device in the second cell may be the first number; or the maximum value, in a time unit corresponding to the second subcarrier spacing, of the number of PDCCH candidates that are used to schedule the first cell and that need to be monitored by the terminal device in the second cell may be greater than the first number or is not determined based on the first number. In addition, the maximum value, in a time unit corresponding to the second subcarrier spacing, of the number of PDCCH candidates that are used to schedule the first cell and that need to be monitored by the terminal device in the second cell may not be determined based on a second total number.

For example, when the time unit is a slot, if the configuration parameter of the second subcarrier spacing is $\mu2$, the first number may be $M_{PDCCH}^{max,slot,\mu2}$ corresponding to $\mu2$ in Table 1. For example, if $\mu2$ is 1, the first number is 36.

Condition 1-6: A maximum value, in a time unit corresponding to the second subcarrier spacing, of a number of non-overlapping CCEs in a PDCCH candidate that needs to be monitored by the terminal device in the second cell is determined based on a second number, where the second number is a preset maximum value of a number of non-overlapping CCEs in the PDCCH candidate that needs to be monitored in the time unit corresponding to the second subcarrier spacing. For example, the maximum value, in a time unit corresponding to the second subcarrier spacing, of the number of non-overlapping CCEs in the PDCCH candidate that needs to be monitored by the terminal device in the second cell may be the second number; the maximum value, in a time unit corresponding to the second subcarrier spacing, of the number of non-overlapping CCEs in the PDCCH candidate that needs to be monitored by the terminal device in the second cell may be greater than the second number; or the maximum value, in a time unit corresponding to the second subcarrier spacing, of the number of non-overlapping control channel elements in the physical downlink control channel candidate that needs to be monitored by the terminal device in the second cell is not determined based on the second number. In addition, the maximum value, in a time unit corresponding to the second subcarrier spacing, of the number of non-overlapping CCEs in the PDCCH candidate that needs to be monitored by the terminal device in the second cell may not be determined based on a fourth total number.

For example, when the time unit is a slot, if the configuration parameter of the second subcarrier spacing is

$\mu2$, the second number may be $C_{PDCCH}^{max,slot,\mu2}$ corresponding to $\mu2$ in Table 2. For example, if $\mu2$ is 1, the second number is 56.

Condition 1-7: All search spaces in the second cell that is used to schedule the first cell are configured within three consecutive symbols of a time unit corresponding to the first subcarrier spacing, that is, all PDCCH candidates that need to be monitored and that are in the second cell used to schedule the first cell are configured within three consecutive symbols in a time unit of the first cell. The three symbols herein are three OFDM symbols corresponding to three first subcarrier spacings.

Condition 1-8: All search spaces in the first cell and the second cell that are used to schedule the first cell are configured within three consecutive symbols of a time unit corresponding to the first subcarrier spacing, that is, all PDCCH candidates that need to be monitored and that are in the first cell and the second cell that are used to schedule the first cell are configured within three consecutive symbols in a time unit of the first cell. The three symbols herein are three OFDM symbols corresponding to three first subcarrier spacings.

Condition 1-9: All search spaces in the second cell that is used to schedule the first cell are configured within three consecutive symbols of a time unit corresponding to the second subcarrier spacing, that is, all PDCCH candidates that need to be monitored and that are in the second cell used to schedule the first cell are configured within three consecutive symbols in a time unit of the second cell. The three symbols herein are three OFDM symbols corresponding to three second subcarrier spacings.

In this application, the access network device may further send fourth indication information to the terminal device, where the fourth indication information indicates whether the first solution includes one or more of the condition 1-6 to the condition 1-9.

In this application, the second solution may include at least one of the following.

Condition 2-1: A first parameter and a second parameter are allowed to be configured by the access network device, or the first parameter and the second parameter are preset in a protocol.

If the first parameter and the second parameter are allowed to be configured by the access network device, the access network device may configure a value of at least one of the first parameter and the second parameter by using radio resource control (radio resource control, RRC) signaling.

For example, if the first parameter and the second parameter are allowed to be configured by the access network device, the access network device may indicate, to the terminal device, at least one of a value of the first parameter and a value of the second parameter based on third indication information.

In an implementation, if the access network device does not configure the value of the first parameter or the value of the second parameter, the value of the first parameter or the value of the second parameter may be a default value. In another implementation, there is no corresponding default value for the value of the first parameter or the value of the second parameter, and the value of the first parameter or the value of the second parameter is configured by the access network device. If the access network device indicates only one of the value of the first parameter and the value of the second parameter, a sum of the value of the first parameter and the value of the second parameter is preset in a protocol, for example, 1.

If the first parameter and the second parameter are allowed to be configured by the access network device, a sum of the value of the first parameter and the value of the second parameter is 1 in the second solution. In this application, a third parameter may be further included, and the third parameter is allowed to be configured by the access network device. The access network device may configure the value of the first parameter to be equal to a value of the third parameter, or configure the first parameter and the third parameter as a same parameter. In this application, the first parameter is represented by s1, the second parameter is represented by s2, and the third parameter is represented by $\alpha$. In an implementation, s1 may be equal to $\alpha$, and s2 may be equal to $1 - \alpha$.

If the first parameter and the second parameter are preset in a protocol, a first parameter preset in the second solution is different from a first parameter preset in the first solution, and/or a second parameter preset in the second solution is different from a second parameter preset in the first solution. For example, the first parameter preset in the first solution is 1, and the second parameter preset in the first solution is 0. The first parameter preset in the second solution is 1, and the second parameter preset in the second solution is 1; or the first parameter preset in the second solution is 0.5, and the second parameter preset in the second solution is 0.5.

Condition 2-2: A maximum value, in a time unit corresponding to the second subcarrier spacing, of a number of PDCCH candidates that are used to schedule the first cell and that need to be monitored by the terminal device in the second cell is determined based on a first number and a second total number, for example, may be a minimum value of the first number and the second total number.

For example, when the time unit is a slot, if a configuration parameter of the second subcarrier spacing is $\mu2$, the maximum value, in a time unit corresponding to the second subcarrier spacing, of the number of PDCCH candidates that are used to schedule the first cell and that need to be monitored by the terminal device in the second cell is

$$\min\left(M_{PDCCH}^{max,slot,\mu2}, M_{PDCCH}^{total,slot,\mu2}\right)$$ . The first number is $M_{PDCCH}^{max,slot,\mu2}$ , the second total number is $M_{PDCCH}^{total,slot,\mu2}$ , and min() is an operation of obtaining a minimum value.

Condition 2-3: A maximum value, in a time unit corresponding to the second subcarrier spacing, of a number of non-overlapping CCEs in a PDCCH candidate that needs to be monitored by the terminal device in the second cell is determined based on a second number and a fourth total number, for example, may be a minimum value of the second number and the fourth total number.

For example, when the time unit is a slot, if the configuration parameter of the second subcarrier spacing is $\mu2$, the maximum value, in a time unit corresponding to the second subcarrier spacing, of the number of non-overlapping CCEs in the PDCCH candidate that needs to be monitored by the terminal device in the second cell is

$$\min\left(M_{PDCCH}^{max,slot,\mu2}, M_{PDCCH}^{total,slot,\mu2}\right)$$ . The second number is $C_{PDCCH}^{max,slot,\mu2}$ , and the fourth total number is $C_{PDCCH}^{total,slot,\mu2}$ .

In this application, the first parameter and the second parameter in the first solution and the first parameter and the second parameter in the second solution may be used to determine the first total number, the third total number, the second total number, and the fourth total number. A specific determining process is described in detail below.

Optionally, S204: The access network device sends second indication information to the terminal device, where the second indication information indicates to use the first solution or the second solution.

If the terminal device indicates, based on the first indication information, that the terminal device supports the first solution and the second solution, the access network device may indicate one of the first solution and the second solution based on the second indication information, so that the terminal device determines a solution to be finally used.

If the terminal device indicates, based on the first indication information, that the terminal device supports the first solution and the second solution, the access network device may not send the second indication information. In this case, the terminal device and the access network device use one of the first solution and the second solution by default, and the default solution may be specified in a protocol, or may be agreed on in another manner.

If the terminal device indicates, based on the first indication information, that the terminal device supports one of the first solution and the second solution, the access network device may indicate, based on the second indication information, to use the solution. Alternatively, the access network device may not send the second indication information, and the terminal device and the access network device use, by default, a solution supported by the terminal device.

S205: The access network device separately determines configurations of search space sets of the first cell and the second cell based on the first solution or the second solution.

The access network device may determine, based on the first solution or the second solution, at least one of the maximum value of the number of PDCCH candidates that need to be monitored by the terminal device and the maximum value of the number of non-overlapping CCEs in the PDCCH candidates that need to be monitored. Therefore, a corresponding search space set may be configured based on the maximum value of the number of PDCCH candidates that need to be monitored by the terminal device and/or the maximum value of the number of non-overlapping CCEs in the PDCCH candidates that need to be monitored by the terminal device. A specific configuration process is not limited in this application. Details are not described herein again.

The access network device may further send configuration information to the terminal device, where the configuration information indicates the configurations of the search space sets of the first cell and the second cell.

Optionally, S206: The access network device sends third indication information to the terminal device.

The third indication information may further indicate a value of the third parameter.

When the second solution is used, the third indication information indicates at least one of a value of the first parameter and a value of the second parameter in the second solution.

In addition, for the second solution, in an implementation 1, the access network device indicates only one value, and the value is both the value of the first parameter and the value of the third parameter.

Implementation 2: The access network device independently configures the value of the first parameter and the value of the third parameter.

Implementation 3: The access network device independently configures the value of the first parameter, the value of the second parameter, and the value of the third parameter.

S207: The terminal device determines at least one of the maximum value of the number of PDCCH candidates that need to be monitored and the maximum value of the number of non-overlapping CCEs in the PDCCH candidates that need to be monitored.

When the first cell and the second cell jointly schedule the first cell, if the terminal device receives the second indication information, the terminal device may determine, based on a solution indicated by the second indication information, at least one of the maximum value of the number of PDCCH candidates that need to be monitored and the maximum value of the number of non-overlapping CCEs in the PDCCH candidates that need to be monitored. If the terminal device does not receive the second indication information, the terminal device may determine, based on a default solution in the first solution and the second solution, at least one of the maximum value of the number of PDCCH candidates that need to be monitored and the maximum value of the number of non-overlapping CCEs in the PDCCH candidates that need to be monitored.

As described above, in this application, the first solution or the second solution is used to determine at least one of the maximum value, in a time unit corresponding to the second subcarrier spacing, of the number of PDCCH candidates that need to be monitored by the terminal device in the second cell and the maximum value of the number of non-overlapping CCEs in the PDCCH candidates that need to be monitored.

The terminal device further needs to determine at least one of a maximum value, in a time unit corresponding to the first subcarrier spacing, of a number of PDCCH candidates that are used to schedule the first cell and that need to be monitored in the first cell and a maximum value of a number of non-overlapping CCEs in the PDCCH candidates that are used to schedule the first cell and that need to be monitored.

The terminal device further needs to determine at least one of a maximum value, in a time unit corresponding to the first subcarrier spacing, of a number of PDCCH candidates that are used to schedule the first cell and that need to be monitored in the second cell and a maximum value of a number of non-overlapping CCEs in the PDCCH candidates that are used to schedule the first cell and that need to be monitored. Descriptions are separately provided below.

It is assumed that the first subcarrier spacing corresponds to $\mu1$, and the second subcarrier spacing corresponds to $\mu2$. For example, the time unit is a slot. In this case, the following parameters in this application may be respectively represented as follows.

The first number may be represented as $M_{PDCCH}^{max,slot,\mu2}$, and the second number may be represented as $C_{PDCCH}^{max,slot,\mu2}$.

The third number may be represented as $M_{PDCCH}^{max,slot,\mu1}$, and the fourth number may be represented as $C_{PDCCH}^{max,slot,\mu1}$.

The first total number may be represented as $M_{PDCCH}^{total,slot,\mu1}$, and the third total number may be represented as $C_{PDCCH}^{total,slot,\mu1}$.

The second total number may be represented as $M_{PDCCH}^{total,slot,\mu2}$, and the fourth total number may be represented as $C_{PDCCH}^{total,slot,\mu2}$.

When the first cell and the second cell jointly schedule the first cell, the following two cases exist.

Case 1: In the first cell, for self-scheduling:
if the first solution is used, a maximum value, in a time unit corresponding to the first subcarrier spacing, of a number of PDCCH candidates that are used to schedule the first cell and that need to be monitored by the terminal device in the first cell is obtained by multiplying a minimum value of a third number and the first total number by the third parameter, where the third number is a preset maximum value of a number of PDCCH candidates that need to be monitored in the time unit corresponding to the first subcarrier spacing.

For example, when the time unit is a slot, the third number may be $M_{PDCCH}^{max,slot,\mu1}$ corresponding to $\mu1$ in Table 1. For example, if $\mu1$ is 1, the third number is 36.

With reference to the foregoing descriptions, if the first solution is used, the maximum value of the number of PDCCH candidates that are used to schedule the first cell and that need to be monitored by the terminal device meets the following form:

$$\alpha * \min\left(M_{PDCCH}^{max,slot,\mu1}, M_{PDCCH}^{total,slot,\mu1}\right).$$

$\alpha$ is the third parameter, and min() is an operation of obtaining a minimum value.

If the first solution is used, a maximum value, in a time unit corresponding to the first subcarrier spacing, of a number of non-overlapping CCEs in a PDCCH candidate that needs to be monitored by the terminal device in the first cell is obtained by multiplying a minimum value of a fourth number and the second total number by the third parameter, where the fourth number is a preset maximum value of a number of non-overlapping CCEs in the PDCCH candidate that needs to be monitored in the time unit corresponding to the first subcarrier spacing.

For example, when the time unit is a slot, the fourth number may be $C_{PDCCH}^{max,slot,\mu}$ corresponding to $\mu1$ in Table 2. For example, if $\mu1$ is 1, the fourth number is 56.

With reference to the foregoing descriptions, if the first solution is used, the maximum value of the number of PDCCH candidates that are used to schedule the first cell and that need to be monitored by the terminal device meets the following form:

$$\alpha * \min\left(C_{PDCCH}^{max,slot,\mu1}, C_{PDCCH}^{total,slot,\mu1}\right).$$

If the second solution is used, a maximum value, in a time unit corresponding to the first subcarrier spacing, of a number of PDCCH candidates that are used to schedule the first cell and that need to be monitored by the terminal device in the first cell is obtained by multiplying a third number by the third parameter.

With reference to the foregoing descriptions, if the second solution is used, the maximum value of the number of PDCCH candidates that are used to schedule the first cell and that need to be monitored by the terminal device meets the following form:

$$\alpha * M_{PDCCH}^{max,slot,\mu1}.$$

If the second solution is used, a maximum value, in a time unit corresponding to the first subcarrier spacing, of a number of non-overlapping CCEs in a PDCCH candidate that needs to be monitored by the terminal device in the first cell is obtained by multiplying a fourth number by the third parameter.

With reference to the foregoing descriptions, if the second solution is used, the maximum value of the number of PDCCH candidates that are used to schedule the first cell and that need to be monitored by the terminal device meets the following form:

$$\alpha * C_{PDCCH}^{max,slot,\mu1}.$$

Case 2 is further divided into two examples.

Example 1: If the first solution is used, a maximum value, in a time unit corresponding to the second subcarrier spacing, of a number of PDCCH candidates that are used to schedule the first cell and that need to be monitored by the terminal device in the second cell is a first number, or a maximum value of a number of PDCCH candidates that are used to schedule the first cell and that need to be monitored by the terminal device may be greater than a first number or has no upper limit.

For example, when the time unit is a slot, the maximum value of the number of PDCCH candidates that are used to schedule the first cell and that need to be monitored by the terminal device is . For example, if $\mu2$ is 1, the first number is 36. Alternatively, the maximum value of the number of PDCCH candidates that are used to schedule the first cell and that need to be monitored by the terminal device may be greater than , and the maximum value may not be determined based on $M_{PDCCH}^{max,slot,\mu2}$ .

A maximum value of a number of non-overlapping CCEs in a PDCCH candidate that needs to be monitored by the terminal device is a second number, or a maximum value of a number of non-overlapping CCEs in the PDCCH candidate that needs to be monitored by the terminal device may be greater than a second number or has no upper limit.

For example, when the time unit is a slot, the maximum value of the number of non-overlapping CCEs in the PDCCH candidate that needs to be monitored by the terminal device is $C_{PDCCH}^{max,slot,\mu2}$ . For example, if $\mu2$ is 1, the second number is 56. Alternatively, the maximum value may be greater than $C_{PDCCH}^{max,slot,\mu2}$ , and the maximum value may not be determined based on $C_{PDCCH}^{max,slot,\mu2}$ .

Example 1: If the second solution is used, the maximum value, in a time unit corresponding to the second subcarrier spacing, of the number of PDCCH candidates that are used to schedule the first cell and that need to be monitored by the terminal device in the second cell is a minimum value of the first number and the second total number.

For example, when the time unit is a slot, the maximum value of the number of PDCCH candidates that are used to schedule the first cell and that need to be monitored by the terminal device is $\min\left(M_{PDCCH}^{max,slot,\mu2}, M_{PDCCH}^{total,slot,\mu2}\right)$.

The maximum value of the number of non-overlapping CCEs in the PDCCH candidate that is used to schedule the first cell and that needs to be monitored by the terminal device is a minimum value between the second number and the fourth total number.

For example, when the time unit is a slot, the maximum value of the number of non-overlapping CCEs in the PDCCH candidate that needs to be monitored by the terminal device is $\min\left(M_{PDCCH}^{max,slot,\mu2}, M_{PDCCH}^{total,slot,\mu2}\right)$.

Example 2: If the first solution is used, the maximum value, in a time unit corresponding to the first subcarrier spacing, of the number of PDCCH candidates that are used to schedule the first cell and that need to be monitored by the terminal device in the second cell is obtained by multiplying a minimum value of the third number and the first total number by a difference between 1 and the third parameter.

For example, when the time unit is a slot, the maximum value of the number of PDCCH candidates that are used to schedule the first cell and that need to be monitored by the terminal device meets the following form:

$$\left(1-\alpha\right)*\min\left(M_{PDCCH}^{max,slot,\mu1}, M_{PDCCH}^{total,slot,\mu1}\right).$$

The maximum value of the number of non-overlapping CCEs in the PDCCH candidate that is used to schedule the first cell and that needs to be monitored by the terminal device is obtained by multiplying a minimum value of the fourth number and the second total number by a difference between 1 and the third parameter.

For example, when the time unit is a slot, the maximum value of the number of non-overlapping CCEs in the PDCCH candidate that needs to be monitored by the terminal device meets the following form:

$$\left(1-\alpha\right)*\min\left(C_{PDCCH}^{max,slot,\mu1}, C_{PDCCH}^{total,slot,\mu1}\right).$$

Example 2: If the second solution is used, the maximum value, in a time unit corresponding to the first subcarrier spacing, of the number of PDCCH candidates that are used to schedule the first cell and that need to be monitored by the terminal device in the second cell is obtained by multiplying the third number by a difference between 1 and the third parameter.

For example, when the time unit is a slot, the maximum value of the number of PDCCH candidates that are used to schedule the first cell and that need to be monitored by the terminal device meets the following form:

$$\left(1-\alpha\right)*M_{PDCCH}^{max,slot,\mu1}.$$

The maximum value of the number of non-overlapping CCEs in the PDCCH candidate that is used to schedule the first cell and that needs to be monitored by the terminal device is obtained by multiplying the fourth number by a difference between 1 and the third parameter.

For example, when the time unit is a slot, the maximum value of the number of non-overlapping CCEs in the PDCCH candidate that needs to be monitored by the terminal device meets the following form:

$$\left(1-\alpha\right)*C_{PDCCH}^{max,slot,\mu1}.$$

When $\mu1 < \mu2$, because a slot corresponding to the first subcarrier spacing is greater than a slot corresponding to the second subcarrier spacing, the maximum value, in a time unit corresponding to the second subcarrier spacing, of the number of PDCCH candidates that are used to schedule the first cell and that need to be monitored by the terminal device in the second cell may be $\left(1-\alpha\right)*\min\left(M_{PDCCH}^{max,slot,\mu1}, M_{PDCCH}^{total,slot,\mu1}\right)$, and the maximum value of the number of non-overlapping CCEs in the PDCCH candidate that needs to be monitored by the terminal device may meet the following form: $\left(1-\alpha\right)*\min\left(C_{PDCCH}^{max,slot,\mu1}, C_{PDCCH}^{total,slot,\mu1}\right)$.

A network device may also determine, by using a same method as the terminal device, maximum values of a number of PDCCH candidates that need to be monitored by the terminal device and maximum values of a number of non-overlapping CCEs in the PDCCH candidates that need to be monitored in different cases, to determine configurations of search spaces corresponding to the first cell and the second cell.

Further, as described above, the first parameter and the second parameter in the first solution and the first parameter and the second parameter in the second solution may be used to determine the first total number, the third total number, the second total number, and the fourth total number. The following separately describes how to determine the foregoing quantities.

In this application, a first total number, a third total number, a second total number, and a fourth total number that are determined by using the first parameter and the second parameter in the first solution may meet descriptions in Manner 1, or may meet descriptions in Manner 2; and a first total number, a third total number, a second total number, and a fourth total number that are determined by using the first parameter and the second parameter in the second solution may meet descriptions in Manner 1, or may meet descriptions in Manner 2.

A "scheduling cell" in Manner 1 to Manner 4 described below is a cell for scheduling the current cell or a cell for scheduling another cell in cells accessed by the terminal device.

Manner 1:

The first total number is a maximum value, in a time unit corresponding to the first subcarrier spacing, of a sum of a number of PDCCH candidates that need to be monitored by the terminal device in all scheduling cells in which a subcarrier spacing of an active downlink bandwidth part is the first subcarrier spacing and a number of PDCCH candidates that are used to schedule the first cell and that need to be monitored by the terminal device in the second cell; and the third total number is a maximum value, in a time unit corresponding to the first subcarrier spacing, of a sum of a number of non-overlapping CCEs in the PDCCH candidates that need to be monitored by the terminal device in all the scheduling cells in which a subcarrier spacing of an active downlink bandwidth part is the first subcarrier spacing and a number of non-overlapping CCEs in the PDCCH candidates that are used to schedule the first cell and that need to be monitored by the terminal device in the second cell.

For example, when the time unit is a slot, if the configuration parameter of the first subcarrier spacing is $\mu1$, the first total number $M_{PDCCH}^{total,slot,\mu1}$ may meet the following form:

$$M_{PDCCH}^{total,slot,\mu1} = \left\lfloor \frac{\text{Number of cells corresponding to } \mu1}{\text{Number of cells corresponding to all subcarrier spacings}} \cdot M_{PDCCH}^{max,slot,\mu1} \cdot \text{UE capability} \right\rfloor.$$

The number of cells corresponding to all subcarrier spacings in the formula includes the number of cells corresponding to $\mu1$ and a number of cells corresponding to $\mu2$.

The number of cells corresponding to $\mu1$ may be considered as a number of scheduled cells whose scheduling cells have a subcarrier spacing corresponding to $\mu1$. In this case, in the number of cells corresponding to $\mu1$, a count of the first cell is the first parameter, and in the number of cells corresponding to $\mu2$, a count of the first cell is the second parameter.

The number of cells corresponding to $\mu1$ may also be considered as a number of scheduling cells in which a subcarrier spacing corresponds to $\mu1$. In this case, in the number of cells corresponding to $\mu1$, a count of the first cell is the first parameter, or a count of the first cell used as a scheduling cell of the first cell is the first parameter; and in the number of cells corresponding to $\mu2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

When the time unit is a slot, if the configuration parameter of the first subcarrier spacing is $\mu1$, the third total number $C_{PDCCH}^{total,slot,\mu1}$ may meet the following form:

$$C_{PDCCH}^{total,slot,\mu1} = \left\lfloor \frac{\text{Number of cells corresponding to } \mu1}{\text{Number of cells corresponding to all subcarrier spacings}} \cdot C_{PDCCH}^{max,slot,\mu1} \cdot \text{UE capability} \right\rfloor.$$

The number of cells corresponding to all subcarrier spacings in the formula includes the number of cells corresponding to $\mu 1$ and a number of cells corresponding to $\mu 2$.

The number of cells corresponding to $\mu 1$ may be considered as a number of scheduled cells whose scheduling cells have a subcarrier spacing corresponding to $\mu 1$. In this case, in the number of cells corresponding to $\mu 1$, a count of the first cell is the first parameter, and in the number of cells corresponding to $\mu 2$, a count of the first cell is the second parameter.

The number of cells corresponding to $\mu 1$ may also be considered as a number of scheduling cells in which a subcarrier spacing corresponds to $\mu 1$. In this case, in the number of cells corresponding to $\mu 1$, a count of the first cell is the first parameter, or a count of the first cell used as a scheduling cell of the first cell is the first parameter; and in the number of cells corresponding to $\mu 2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

Manner 2:

The first total number is a maximum value, in a time unit corresponding to the first subcarrier spacing, of a number of PDCCH candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping CCEs in the PDCCH candidates that need to be monitored by the terminal device in all the scheduling cells in which a subcarrier spacing of an active downlink bandwidth part is the first subcarrier spacing.

For example, when the time unit is a slot, if the configuration parameter of the first subcarrier spacing is $\mu 1$, the first total number $M_{PDCCH}^{total,slot,\mu 1}$ may meet the following form:

$$M_{PDCCH}^{total,slot,\mu 1} = \left\lfloor \frac{\text{Number of cells corresponding to } \mu 1}{\text{Number of cells corresponding to all subcarrier spacings}} \cdot M_{PDCCH}^{max,slot,\mu 1} \cdot \text{UE capability} \right\rfloor.$$

The number of cells corresponding to all subcarrier spacings in the formula includes the number of cells corresponding to $\mu 1$ and a number of cells corresponding to $\mu 2$.

The number of cells corresponding to $\mu 1$ may be considered as a number of scheduled cells whose scheduling cells have a subcarrier spacing corresponding to $\mu 1$. In this case, in the number of cells corresponding to $\mu 1$, a count of the first cell is the first parameter, and in the number of cells corresponding to $\mu 2$, a count of the first cell is the second parameter.

The number of cells corresponding to $\mu 1$ may also be considered as a number of scheduling cells in which a subcarrier spacing corresponds to $\mu 1$. In this case, in the number of cells corresponding to $\mu 1$, a count of the first cell is the first parameter, or a count of the first cell used as a scheduling cell of the first cell is the first parameter; and in the number of cells corresponding to $\mu 2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

When the time unit is a slot, if the configuration parameter of the first subcarrier spacing is $\mu 1$, the third total number $C_{PDCCH}^{total,slot,\mu 1}$ may meet the following form:

$$C_{PDCCH}^{total,slot,\mu 1} = \left\lfloor \frac{\text{Number of cells corresponding to } \mu 1}{\text{Number of cells corresponding to all subcarrier spacings}} \cdot C_{PDCCH}^{max,slot,\mu 1} \cdot \text{UE capability} \right\rfloor.$$

The number of cells corresponding to all subcarrier spacings in the formula includes the number of cells corresponding to $\mu 1$ and a number of cells corresponding to $\mu 2$.

The number of cells corresponding to $\mu 1$ may be considered as a number of scheduled cells whose scheduling cells have a subcarrier spacing corresponding to $\mu 1$. In this case, in the number of cells corresponding to $\mu 1$, a count of the first cell is the first parameter, and in the number of cells corresponding to $\mu 2$, a count of the first cell is the second parameter.

The number of cells corresponding to $\mu 1$ may also be considered as a number of scheduling cells in which a subcarrier spacing corresponds to $\mu 1$. In this case, in the number of cells corresponding to $\mu 1$, a count of the first cell is the first parameter, or a count of the first cell used as a scheduling cell of the first cell is the first parameter; and in the number of cells corresponding to $\mu 2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

For example, it is assumed that there are six cells with the first subcarrier spacing, the six cells include the first cell, and the other five cells are self-scheduling cells; or there are two cells with the second subcarrier spacing, the two cells include the second cell, the other cell is a self-scheduling cell, and the second cell is also a self-scheduling cell. The first subcarrier spacing corresponds to $\mu 1$, and the second subcarrier spacing corresponds to $\mu 2$.

If the first solution is used, s1=1, and s2=0. When the first total number and the third total number meet Manner 2, during calculation of the first total number and the third total number, a number of cells corresponding to all subcarrier spacings is 8=6+2.

A number of cells corresponding to $\mu 1$ is 6=5+1, that is, a number of cells corresponding to the first subcarrier spacing is 6. 1 represents s1, and indicates that a count of the first cell is 1 in a count of a scheduled cell whose scheduling cell has a subcarrier spacing corresponding to $\mu 1$, or indicates that a count of the first cell is 1 in a count of a scheduling cell whose subcarrier spacing is $\mu 1$.

A number of cells corresponding to $\mu 2$ is 2=2+0, that is, a number of cells corresponding to the second subcarrier spacing is 2. 0 represents s2, and indicates that a count of the first cell is 0 in a count of a scheduled cell whose scheduling cell has a subcarrier spacing corresponding to $\mu 2$, or indicates that a count of the second cell is 0 in a count of a scheduling cell whose subcarrier spacing is $\mu 2$. Further, when the second cell is used as a scheduling cell of the first cell, a count of the second cell is 0.

For example, it is assumed that a number of cells corresponding to all subcarrier spacings is C, the cells include C1 cells with the first subcarrier spacing, the C1 cells with the first subcarrier spacing include the first cell, and other cells are self-scheduling cells; and C cells corresponding to all subcarrier spacings further include C2 cells with the second subcarrier spacing, the C2 cells with the second subcarrier spacing include the second cell, other cells are self-scheduling cells, and the second cell is also a self-scheduling cell. The first subcarrier spacing corresponds to $\mu 1$, and the second subcarrier spacing corresponds to $\mu 2$.

When the first total number and the third total number meet Manner 2, during calculation of the first total number and the third total number, a number of cells corresponding to all subcarrier spacings is C1+C2.

A number of cells corresponding to $\mu 1$ is (C1-1)+s1, that is, a number of cells corresponding to the first subcarrier spacing is (C1-1)+s1. s1 indicates that a count of the first cell is s1 in a count of a scheduled cell whose scheduling cell has a subcarrier spacing corresponding to $\mu 1$, or indicates that a count of the first cell is s1 in a count of a scheduling cell whose subcarrier spacing is $\mu 1$.

In this case, the first total number $M_{PDCCH}^{total,slot,\mu 1}$ may be represented as:

$$M_{PDCCH}^{total,slot,\mu 1} = \left\lfloor \frac{C1-1+s1}{C} \cdot M_{PDCCH}^{max,slot,\mu 1} \cdot \text{UE capability} \right\rfloor;$$

and the third total number $C_{PDCCH}^{total,slot,\mu 1}$ may be represented as:

$$C_{PDCCH}^{total,slot,\mu1} = \left\lfloor \frac{C1-1+s1}{C} \cdot C_{PDCCH}^{max,slot,\mu1} \cdot \text{UE capability} \right\rfloor .$$

In this application, the second total number and the fourth total number that correspond to the first solution meet any one of the following, and the second total number and the fourth total number that correspond to the second solution meet any one of the following. In other words, a second total number and a fourth total number that are determined by using the first parameter and the second parameter in the first solution may meet descriptions in Manner 3, or may meet descriptions in Manner 4; and a second total number and a fourth total number that are determined by using the first parameter and the second parameter in the second solution may meet descriptions in Manner 3, or may meet descriptions in Manner 4.

Manner 3

The second total number is a maximum value, in a time unit corresponding to the second subcarrier spacing, of a number of PDCCH candidates, other than a PDCCH candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping CCEs in the PDCCH candidates, other than a non-overlapping CCE in the PDCCH candidate that is used to schedule the first cell and that needs to be monitored by the terminal device in the second cell, that need to be monitored by the terminal device in all the scheduling cells in which a subcarrier spacing of an active downlink bandwidth part is the second subcarrier spacing

For example, when the time unit is a slot, if the configuration parameter of the second subcarrier spacing is $\mu2$, the second total number $M_{PDCCH}^{total,slot,\mu2}$ may meet the following form:

$$M_{PDCCH}^{total,slot,\mu2} = \left\lfloor \frac{\text{Number of cells corresponding to } \mu2}{\text{Number of cells corresponding to all subcarrier spacings}} \cdot M_{PDCCH}^{max,slot,\mu2} \cdot \text{UE capability} \right\rfloor .$$

The number of cells corresponding to all subcarrier spacings in the formula includes a number of cells corresponding to $\mu1$ and the number of cells corresponding to $\mu2$.

The number of cells corresponding to $\mu1$ may be considered as a number of scheduled cells whose scheduling cells have a subcarrier spacing corresponding to $\mu1$. In this case, in the number of cells corresponding to $\mu1$, a count of the first cell is the first parameter, and in the number of cells corresponding to $\mu2$, a count of the first cell is the second parameter.

The number of cells corresponding to $\mu1$ may also be considered as a number of scheduling cells in which a subcarrier spacing corresponds to $\mu1$. In this case, in the number of cells corresponding to $\mu1$, a count of the first cell is the first parameter, or a count of the first cell used as a scheduling cell of the first cell is the first parameter; and in the number of cells corresponding to $\mu2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

When the time unit is a slot, if the configuration parameter of the second subcarrier spacing is $\mu2$, the fourth total number $C_{PDCCH}^{total,slot,\mu2}$ may meet the following form:

$$C_{PDCCH}^{total,slot,\mu2} = \left\lfloor \frac{\text{Number of cells corresponding to } \mu2}{\text{Number of cells corresponding to all subcarrier spacings}} \cdot C_{PDCCH}^{max,slot,\mu2} \cdot \text{UE capability} \right\rfloor .$$

The number of cells corresponding to all subcarrier spacings in the formula includes a number of cells corresponding to $\mu 1$ and the number of cells corresponding to $\mu 2$.

The number of cells corresponding to $\mu 1$ may be considered as a number of scheduled cells whose scheduling cells have a subcarrier spacing corresponding to $\mu 1$. In this case, in the number of cells corresponding to $\mu 1$, a count of the first cell is the first parameter, and in the number of cells corresponding to $\mu 2$, a count of the first cell is the second parameter.

The number of cells corresponding to $\mu 1$ may also be considered as a number of scheduling cells in which a subcarrier spacing corresponds to $\mu 1$. In this case, in the number of cells corresponding to $\mu 1$, a count of the first cell is the first parameter, or a count of the first cell used as a scheduling cell of the first cell is the first parameter; and in the number of cells corresponding to $\mu 2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count. The UE capability indicates a number of cells in which blind detection is supported to be performed by the terminal device simultaneously, and may be reported in a form of a parameter pdcch-BlindDetectionCA or the like.

Manner 4

The second total number is a maximum value, in a time unit corresponding to the second subcarrier spacing, of a number of PDCCH candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping CCEs in the PDCCH candidates that need to be monitored by the terminal device in all the scheduling cells in which a subcarrier spacing of an active downlink bandwidth part is the second subcarrier spacing.

For example, when the time unit is a slot, if the configuration parameter of the second subcarrier spacing is $\mu 2$, the second total number $M_{PDCCH}^{total,slot,\mu 2}$ may meet the following form:

$$M_{PDCCH}^{total,slot,\mu 2} = \left\lfloor \frac{\text{Number of cells corresponding to } \mu 2}{\text{Number of cells corresponding to all subcarrier spacings}} \cdot M_{PDCCH}^{max,slot,\mu 2} \cdot \text{UE capability} \right\rfloor.$$

The number of cells corresponding to all subcarrier spacings in the formula includes a number of cells corresponding to $\mu 1$ and the number of cells corresponding to $\mu 2$.

The number of cells corresponding to $\mu 1$ may be considered as a number of scheduled cells whose scheduling cells have a subcarrier spacing corresponding to $\mu 1$. In this case, in the number of cells corresponding to $\mu 1$, a count of the first cell is the first parameter, and in the number of cells corresponding to $\mu 2$, a count of the first cell is the second parameter.

The number of cells corresponding to $\mu 1$ may also be considered as a number of scheduling cells in which a subcarrier spacing corresponds to $\mu 1$. In this case, in the number of cells corresponding to $\mu 1$, a count of the first cell is the first parameter, or a count of the first cell used as a scheduling cell of the first cell is the first parameter; and in the number of cells corresponding to $\mu 2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count.

The UE capability indicates a number of cells in which blind detection is supported to be performed by the terminal device simultaneously, and may be reported in a form of a parameter pdcch-BlindDetectionCA or the like.

When the time unit is a slot, if the configuration parameter of the second subcarrier spacing is $\mu 2$, the fourth total number $C_{PDCCH}^{total,slot,\mu 2}$ may meet the following form:

$$C_{PDCCH}^{total,slot,\mu 2} = \left\lfloor \frac{\text{Number of cells corresponding to } \mu 2}{\text{Number of cells corresponding to all subcarrier spacings}} \cdot C_{PDCCH}^{max,slot,\mu 2} \cdot \text{UE capability} \right\rfloor.$$

The number of cells corresponding to all subcarrier spacings in the formula includes a number of cells corresponding to $\mu1$ and the number of cells corresponding to $\mu2$.

The number of cells corresponding to $\mu1$ may be considered as a number of scheduled cells whose scheduling cells have a subcarrier spacing corresponding to $\mu1$. In this case, in the number of cells corresponding to $\mu1$, a count of the first cell is the first parameter, and in the number of cells corresponding to $\mu2$, a count of the first cell is the second parameter.

The number of cells corresponding to $\mu1$ may also be considered as a number of scheduling cells in which a subcarrier spacing corresponds to $\mu1$. In this case, in the number of cells corresponding to $\mu1$, a count of the first cell is the first parameter, or a count of the first cell used as a scheduling cell of the first cell is the first parameter; and in the number of cells corresponding to $\mu2$, a count of the second cell used as a scheduling cell for scheduling the first cell is the second parameter. When the second cell is used as a scheduling cell for scheduling the first cell, a count of the second cell is the second parameter, which means that when the second cell is used as a self-scheduling cell or a scheduling cell for scheduling another cell, the second cell may have another count.

The UE capability indicates a number of cells in which blind detection is supported to be performed by the terminal device simultaneously, and may be reported in a form of a parameter pdcch-BlindDetectionCA or the like.

For example, it is assumed that a number of cells corresponding to all subcarrier spacings is C, the cells include C1 cells with the first subcarrier spacing, the C1 cells with the first subcarrier spacing include the first cell, and other cells are self-scheduling cells; and C cells corresponding to all subcarrier spacings further include C2 cells with the second subcarrier spacing, the C2 cells with the second subcarrier spacing include the second cell, other cells are self-scheduling cells, and the second cell is also a self-scheduling cell. The first subcarrier spacing corresponds to $\mu1$, and the second subcarrier spacing corresponds to $\mu2$.

When the second total number and the fourth total number meet Manner 4, during calculation of the second total number and the fourth total number, a number of cells corresponding to all subcarrier spacings is C1+C2.

A number of cells corresponding to $\mu2$ is C2+s2, where s2 indicates that a count of the first cell is s2 in a count of a scheduled cell whose scheduling cell has a subcarrier spacing corresponding to $\mu2$, or indicates a count of the second cell is s2 in a count of a scheduling cell whose subcarrier spacing is $\mu2$. Further, when the second cell is used as a scheduling cell of the first cell, a count of the second cell is s2.

In this case, the second total number $M_{PDCCH}^{total,slot,\mu2}$ may be represented as:

$$M_{PDCCH}^{total,slot,\mu2} = \left\lfloor \frac{C2+s2}{C} \cdot M_{PDCCH}^{max,slot,\mu2} \cdot \text{UE capability} \right\rfloor;$$

and the fourth total number $C_{PDCCH}^{total,slot,\mu2}$ may be represented as:

$$C_{PDCCH}^{total,slot,\mu2} = \left\lfloor \frac{C2+s2}{C} \cdot C_{PDCCH}^{max,slot,\mu2} \cdot \text{UE capability} \right\rfloor.$$

In this application, the first solution may correspond to a first scenario, that is, the first solution is used in the first scenario; and the second solution may correspond to a second scenario, that is, the second solution is used in the second scenario.

First scenario:

Control channels of the first cell and the second cell are received by using a BD/CCE capability corresponding to the first subcarrier spacing.

A subcarrier spacing of the first cell corresponds to $\mu1$, and a subcarrier spacing of the second cell corresponds to $\mu2$. The control channels of the two cells are actually received by using the BD/CCE capability corresponding to the first subcarrier spacing, and the two cells schedule a cell in which a subcarrier spacing is the first subcarrier spacing, that is, the first cell. Therefore, when BD/CCE upper limits of all cells in which a subcarrier spacing corresponds to $\mu1$ are calculated, a value of s1 is 1; and when BD/CCE upper limits of all cells in which a subcarrier spacing corresponds to $\mu2$ are calculated, a value of s2 is 0, that is, a BD/CCE capability corresponding to the second subcarrier spacing is actually not used, that is, "s1=1, and s2=0".

When a BD/CCE monitoring upper limit of the terminal device in a time unit corresponding to the subcarrier spacing of the second cell is determined, BD/CCE upper limits $M_{PDCCH}^{total,slot,\mu2}$ of all cells in which a subcarrier spacing corresponds to $\mu2$ do not need to be considered. Therefore, a maximum value, in a time unit corresponding to the second subcarrier spacing, of a number of PDCCH candidates that are used to schedule the first cell and that need to be monitored by the terminal device in the second cell and a maximum value of a number of non-overlapping CCEs in the PDCCH candidates that are used to schedule the first cell and that need to be monitored by the terminal device may be determined by using the first solution.

In the first solution, if further, for a terminal device with one capability, the access network device needs to ensure that a configured search space set falls within three same consecutive OFDM symbols in each time unit. In this case, whether the first solution includes one or more of the condition 1-4 to the condition 1-6 needs to be further limited.

If the subcarrier spacing of the second cell is different from the subcarrier spacing of the first cell, for example, the subcarrier spacing of the second cell is 30 kHz, and the subcarrier spacing of the first cell is 15 kHz, three symbols of the first cell correspond to six symbols of the second cell. In this case, the terminal device needs to store a PDCCH of a maximum of six symbols in the second cell, to perform PDCCH monitoring. If a search space of the second cell is limited to three symbols of the second cell, that is, limited to three symbols corresponding to 30 kHz, the terminal device needs to store a signal of only three symbols in each cell, to perform PDCCH monitoring. This saves storage space of the terminal device.

Second scenario:

When a subcarrier spacing of the first cell is different from a subcarrier spacing of the second cell, control channels of the two cells are received by using monitoring capabilities of different subcarrier spacings, that is, corresponding to BD/CCE capabilities corresponding to different subcarrier spacings.

The subcarrier spacing of the first cell corresponds to $\mu1$, and the subcarrier spacing of the second cell corresponds to $\mu2$. The control channels of the two cells are actually received by using monitoring capabilities of different subcarrier spacings. Therefore, when values of BD/CCE upper limits of all cells in which a subcarrier spacing corresponds to $\mu1$ are calculated, s1 should correspond to a number of BDs/CCEs configured in the first cell; and when BD/CCE upper limits of all cells in which a subcarrier spacing corresponds to $\mu2$ are calculated, s2 should correspond to a number of BDs/CCEs configured in the second cell, that is, "s1 is configured by a higher layer, s1+s2=1 ($\alpha$ and s1 are configured independently), or $s1=\alpha$, and $s2=1-\alpha$".

When a BD/CCE monitoring upper limit of the terminal device in a time unit corresponding to the subcarrier spacing of the second cell is determined, BD/CCE upper limits of all cells in which a subcarrier spacing corresponds to $\mu2$ need to be considered. Therefore, a maximum value, in a time unit corresponding to the second subcarrier spacing, of a number of PDCCH candidates that are used to schedule the first cell and that need to be monitored by the terminal device in the second cell and a maximum value of a number of non-overlapping CCEs in the PDCCH candidates that are used to schedule the first cell and that need to be monitored by the terminal device may be determined by using the second solution.

In the foregoing embodiments provided in this application, the method provided in embodiments of this application is described from a perspective of interaction between devices. To implement the functions in the method provided in embodiments of this application, the access network device and the terminal device may each include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, division into the modules is an example, and is merely logical function division. In actual implementation, another division manner may be used. In addition, functional modules in embodiments of this application may be integrated into one processor, may exist alone physically, or two or more modules may be integrated into one module. The integrated module may be implemented in a form of hardware, or may be implemented in a form of a software functional module.

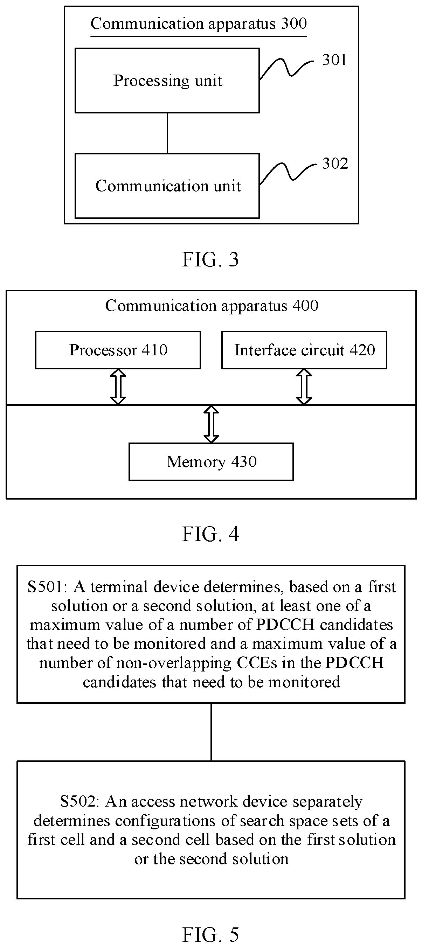

Same as the foregoing idea, as shown in FIG. 3, an embodiment of this application further provides a communication apparatus 300 that is configured to implement functions of the access network device or the terminal device in the foregoing method. A form of the communication apparatus is not limited, and the communication apparatus may be a hardware structure, a software module, or a combination of a hardware structure and a software module. For example, the apparatus may be a software module or a chip system. In this embodiment of this application, the chip system may include a chip, or may include a chip and another discrete component. The apparatus 300 may include a processing unit 301 and a communication unit 302.

In this embodiment of this application, the communication unit may also be referred to as a transceiver unit, and may include a sending unit and/or a receiving unit, which are respectively configured to perform sending and receiving steps of the access network device or the terminal device in the foregoing method embodiments.

The following describes in detail the communication apparatus provided in embodiments of this application with reference to FIG. 3 and FIG. 4. It should be understood that descriptions of apparatus embodiments correspond to descriptions of method embodiments. Therefore, for content that is not described in detail, refer to the method embodiments. For brevity, details are not described herein again.

The communication unit may also be referred to as a transceiver apparatus. The processing unit may also be referred to as a processing module, a processing apparatus, or the like. Optionally, a component that is in the communication unit 302 and that is configured to implement a receiving function may be considered as a receiving unit, and a component that is in the communication unit 302 and that is configured to implement a sending function may be considered as a sending unit. In other words, the communication unit 302 includes the receiving unit and the sending unit. The communication unit sometimes may be implemented as a pin, a transceiver device, a transceiver, a transceiver circuit, or the like. The processing unit sometimes may be implemented as a processor, a processing board, or the like. The receiving unit sometimes may be implemented as a pin, a receiver device, a receiver, a receiver circuit, or the like. The sending unit sometimes may be implemented as a pin, a transmitter device, a transmitter, a transmitter circuit, or the like.

When the communication apparatus 300 performs the functions of the terminal device in a procedure shown in FIG. 2 in the foregoing embodiment,

the processing unit is configured to determine first indication information; and

the communication unit is configured to send first indication information to an access network device, where

the first indication information indicates one or two solutions, supported by the terminal device, in a first solution and a second solution, and both the first solution and the second solution are used to: when a first cell and a second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored.

The first solution includes: A first parameter and a second parameter are preset in a protocol.

The second solution includes: A first parameter and a second parameter are allowed to be configured by the access network device; or the second solution includes: A first parameter and a second parameter are preset in a protocol, the first parameter preset in the second solution is different from the first parameter preset in the first solution, and/or the second parameter preset in the second solution is different from the second parameter preset in the first solution.

The first parameter and the second parameter are used to determine a first total number, a third total number, a second total number, and a fourth total number.

A first total number and a third total number that correspond to the first solution, and a first total number and a third total number that correspond to the second solution both meet any one of the following:

The first total number is a maximum value, in a time unit corresponding to a first subcarrier spacing, of a sum of a number of physical downlink control channel candidates that need to be monitored by the terminal device in all scheduling cells in which a subcarrier spacing of an active downlink bandwidth part is a first subcarrier spacing and a number of physical downlink control channel candidates that are used to schedule the first cell and that need to be monitored by the terminal device in the second cell; and the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or

the first total number is a maximum value, in a time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing.

A second total number and a fourth total number that correspond to the first solution, and a second total number

and a fourth total number that correspond to the second solution both meet any one of the following:

The second total number is a maximum value, in a time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or
the second total number is a maximum value, in a time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, where a subcarrier spacing of the first cell is equal to the first subcarrier spacing, and a subcarrier spacing of the second cell is equal to the second subcarrier spacing.

The foregoing is merely an example. The processing unit 301 and the communication unit 302 may further perform other functions. For more detailed descriptions, refer to descriptions related to the terminal device in the method embodiment shown in FIG. 2. Details are not described herein again.

When the communication apparatus 300 performs the functions of the access network device in a procedure shown in FIG. 2 in the foregoing embodiment,

the communication unit is configured to receive first indication information from a terminal device, where the first indication information indicates one or two solutions, supported by the terminal device, in a first solution and a second solution; and
the processing unit is configured to separately determine configurations of search space sets of a first cell and a second cell based on the first solution or the second solution, where both the first solution and the second solution are used to: when the first cell and the second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored.

Both the first solution and the second solution are used to: when the first cell and the second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored.

The first solution includes: A first parameter and a second parameter are preset in a protocol.

The second solution includes: A first parameter and a second parameter are allowed to be configured by the access network device; or the second solution includes: A first parameter and a second parameter are preset in a protocol, the first parameter preset in the second solution is different from the first parameter preset in the first solution, and/or the second parameter preset in the second solution is different from the second parameter preset in the first solution.

The first parameter and the second parameter are used to determine a first total number, a third total number, a second total number, and a fourth total number. A first total number and a third total number that correspond to the first solution, and a first total number and a third total number that correspond to the second solution both meet any one of the following:

The first total number is a maximum value, in a time unit corresponding to a first subcarrier spacing, of a sum of a number of physical downlink control channel candidates that need to be monitored by the terminal device in all scheduling cells in which a subcarrier spacing of an active downlink bandwidth part is a first subcarrier spacing and a number of physical downlink control channel candidates that are used to schedule the first cell and that need to be monitored by the terminal device in the second cell; and the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or

the first total number is a maximum value, in a time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing.

A second total number and a fourth total number that correspond to the first solution, and a second total number and a fourth total number that correspond to the second solution both meet any one of the following:

The second total number is a maximum value, in a time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or

the second total number is a maximum value, in a time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, where a subcarrier spacing of the first cell is equal to the first subcarrier spacing, and a subcarrier spacing of the second cell is equal to the second subcarrier spacing.

The foregoing is merely an example. The processing unit 301 and the communication unit 302 may further perform other functions. For more detailed descriptions, refer to descriptions related to the access network device in the method embodiment shown in FIG. 2. Details are not described herein again.

FIG. 4 shows an apparatus 400 according to an embodiment of this application. The apparatus shown in FIG. 4 may be an implementation of a hardware circuit of the apparatus shown in FIG. 3. The communication apparatus may be applicable to the flowchart shown above, and perform functions of the terminal device or the access network device in the foregoing method embodiments. For ease of description, FIG. 4 shows only main components of the communication apparatus.

As shown in FIG. 4, a communication apparatus 400 includes a processor 410 and an interface circuit 420. The processor 410 and the interface circuit 420 are coupled to each other. It may be understood that the interface circuit 420 may be a transceiver, a pin, an interface circuit, or an input/output interface. Optionally, the communication apparatus 400 may further include a memory 430 that is configured to: store instructions to be executed by the processor 410, store input data required for running the instructions by the processor 410, or store data generated after the processor 410 runs the instructions. Optionally, a part or all of the memory 430 may be located in the processor 410.

When the communication apparatus 400 is configured to implement the method shown in FIG. 2, the processor 410 is configured to implement functions of the processing unit 301, and the interface circuit 420 is configured to implement functions of the communication unit 302.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

In the foregoing procedure, an example in which the terminal device sends the first indication information is used for description. In this application, the terminal device may alternatively not send the first indication information. In this implementation, whether the first solution or the second solution is specifically used may be determined based on a configuration of another parameter, for example, determined based on a configuration of the first parameter and a configuration of the second parameter. Details are described below.

FIG. 5 is a schematic flowchart of a communication method according to an embodiment of this application.

The method includes the following steps.

S501: A terminal device determines, based on a first solution or a second solution, at least one of a maximum value of a number of PDCCH candidates that need to be monitored and a maximum value of a number of non-overlapping CCEs in the PDCCH candidates that need to be monitored.

S502: An access network device separately determines configurations of search space sets of the first cell and the second cell based on the first solution or the second solution.

For specific content of the first solution or the second solution, refer to related descriptions in the procedure in FIG. 2. Details are not described herein again.

Specifically, whether the first solution or the second solution is used, the terminal device and the access network device may use a same method. Details are as follows.

When a first condition is met, the terminal device determines, based on the first solution, at least one of the maximum value of the number of PDCCH candidates that need to be monitored and the maximum value of the number of non-overlapping CCEs in the PDCCH candidates that need to be monitored; and the access network device separately determines the configurations of the search space sets of the first cell and the second cell based on the first solution.

When a second condition is met, the terminal device determines, based on the second solution, at least one of the maximum value of the number of PDCCH candidates that need to be monitored and the maximum value of the number of non-overlapping CCEs in the PDCCH candidates that need to be monitored; and the access network device separately determines the configurations of the search space sets of the first cell and the second cell based on the second solution.

In a first possible implementation, the first condition may include: A value of a first parameter is 1, and a value of a second parameter is 0; and the second condition may include: A value of a first parameter is not 1, and a value of a second parameter is not 0.

In a second possible implementation, the first condition may include: A first parameter and a second parameter are preset, a preset value of the first parameter is 1, and a preset value of the second parameter is 0; and the second condition may include: At least one of a first parameter and a second parameter is allowed to be configured by the access network device.

The access network device may configure at least one of the first parameter and the second parameter by using RRC signaling. That is, the access network device may configure the first parameter or the second parameter by using RRC signaling, or may configure the first parameter and the second parameter by using RRC signaling.

In a third possible implementation, the first condition may include: The access network device does not configure a first parameter and a second parameter; and the second condition may include: The access network device configures at least one of a first parameter and a second parameter.

The access network device configures at least one of the first parameter and the second parameter. That is, the access network device may configure the first parameter or the second parameter by using RRC signaling, or may configure the first parameter and the second parameter by using RRC signaling.

Alternatively, the access network device may configure at least one of the first parameter and the second parameter in another manner. This is not limited in this application.

In a fourth possible implementation, the first condition may include: A value of a second parameter is 0; and the second condition may include: A value of a second parameter is not 0.

For specific implementations of S501 and S502, refer to related descriptions in the procedure in FIG. 2. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

determining, by a terminal device, first indication information; and
sending, by the terminal device, the first indication information to an access network device, wherein
the first indication information indicates one or two solutions, supported by the terminal device, in a first solution and a second solution, and both the first solution and the second solution are used to: when a first cell and a second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored;
a time unitthe first solution comprises: a first parameter and a second parameter are preset in a protocol;
the second solution comprises: a first parameter and a second parameter are allowed to be configured by the access network device; or the second solution comprises: a first parameter and a second parameter are preset in a protocol, the first parameter preset in the second solution is different from the first parameter preset in the first solution, and/or the second parameter preset in the second solution is different from the second parameter preset in the first solution;
the first parameter and the second parameter are used to determine a first total number, a third total number, a second total number, and a fourth total number;
a first total number and a third total number that correspond to the first solution, and a first total number and a third total number that correspond to the second solution both meet any one of the following:

the first total number is a maximum value, in one time unit corresponding to a first subcarrier spacing, of a sum of a number of physical downlink control channel candidates that need to be monitored by the terminal device in all scheduling cells in which a subcarrier spacing of an active downlink bandwidth part is the first subcarrier spacing and a number of physical downlink control channel candidates that are used to schedule the first cell and that need to be monitored by the terminal device in the second cell; and the third total number is a maximum value, in one time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or
the first total number is a maximum value, in one time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in one time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing; and
a second total number and a fourth total number that correspond to the first solution, and a second total number and a fourth total number that correspond to the second solution both meet any one of the following:

the second total number is a maximum value, in one time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing; and the fourth total number is a maximum value, in one time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or the second total number is a maximum value, in one time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in one time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, wherein a subcarrier spacing of the first cell is equal to the first subcarrier spacing, and a subcarrier spacing of the second cell is equal to the second subcarrier spacing.

2. The method according to claim 1, wherein the first solution further comprises at least one of the following:

a maximum value, in a time unit corresponding to the second subcarrier spacing, of a number of physical downlink control channel candidates that are used to schedule the first cell and that need to be monitored by the terminal device in the second cell is determined based on a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell is not determined based on a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell may be greater than a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is determined based on a second number, wherein the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is not determined based on a second number, wherein the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell may be greater than a second number, wherein the second number is a preset maximum value of a number of non-overlapping control channel elements in the physical downlink control channel candidate that needs to be monitored in the time unit corresponding to the second subcarrier spacing;

all search spaces in the second cell that is used to schedule the first cell are configured within three consecutive symbols of a time unit corresponding to the first subcarrier spacing;

all search spaces in the first cell and the second cell that are used to schedule the first cell are configured within three consecutive symbols of a time unit corresponding to the first subcarrier spacing; or

all search spaces in the second cell that is used to schedule the first cell are configured within three consecutive symbols of a time unit corresponding to the second subcarrier spacing.

3. The method according to claim 1 or 2, wherein the second solution further comprises at least one of the following:

the maximum value, in the time unit corresponding to the second subcarrier spacing, of the number of physical downlink control channel candidates that are used to schedule the first cell and that need to be monitored by the terminal device in the second cell is determined based on the first number and the second total number, wherein the first number is the preset maximum value of the number of physical downlink control channel candidates that need to be monitored in the time unit corresponding to the second subcarrier spacing; or

the maximum value, in the time unit corresponding to the second subcarrier spacing, of the number of non-overlapping control channel elements in the physical downlink control channel candidate that needs to be monitored by the terminal device in the second cell is determined based on the second number and the fourth total number, wherein the second number is the preset maximum value of the number of non-overlapping control channel elements in the physical downlink control channel candidate that needs to be monitored in the time unit corresponding to the second subcarrier spacing.

4. The method according to any one of claims 1 to 3, wherein in the first solution, a preset value of the first parameter is 1, and a preset value of the second parameter is 0.

5. The method according to any one of claims 1 to 4, wherein the method further comprises:
receiving, by the terminal device, third indication information from the access network device, wherein the third indication information indicates at least one of a value of the first parameter and a value of the second parameter in the second solution.

6. The method according to any one of claims 1 to 5, wherein a sum of a value of the first parameter and a value of the second parameter is 1 in the second solution.

7. The method according to any one of claims 1 to 6, wherein

a maximum value, in a time unit corresponding to the first subcarrier spacing, of a number of physical downlink control channel candidates that are used to schedule the first cell and that need to be monitored by the terminal device in the first cell is obtained by multiplying a minimum value of a third number and the first total number by a third parameter, wherein the third number is a preset maximum value of a number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the first cell is obtained by multiplying a minimum value of a fourth number and the second total number by the third parameter, wherein the fourth number is a preset maximum value of a number of non-overlapping control channel elements in the physical downlink control channel candidates that need to be monitored in the time unit corresponding to the first subcarrier spacing.

8. The method according to any one of claims 1 to 7, wherein

a maximum value, in a time unit corresponding to the first subcarrier spacing, of a number of physical downlink control channel candidates that are used to schedule the first cell and that need to be monitored by the terminal device in the second cell is obtained by multiplying a minimum value of the third number and the first total number by a difference between 1 and the third parameter, wherein the third number is the preset maximum value of the number of physical downlink control channel candidates that need to be monitored in the time unit corresponding to the first subcarrier spacing, and the third parameter is allowed to be configured by the access network device; and

a maximum value, in a time unit corresponding to the first subcarrier spacing, of a number of non-overlapping control channel elements in the physical downlink control channel candidates that are used to schedule the first cell and that need to be monitored by the terminal device in the second cell is obtained by multiplying a minimum value of the fourth number and the second total number by the difference between 1 and the third parameter, wherein the fourth number is the preset maximum value of the number of non-overlapping control channel elements in the physical downlink control channel candidates that need to be monitored in the time unit corresponding to the first subcarrier spacing.

9. The method according to any one of claims 1 to 8, wherein the method further comprises:
receiving, by the terminal device, second indication information from the access network device, wherein the second indication information indicates to use the first solution or the second solution.

**10.** The method according to claim 9, wherein the method further comprises:
when the first cell and the second cell jointly schedule the first cell, determining, by the terminal device based on a solution indicated by the second indication information, at least one of the maximum value of the number of physical downlink control channel candidates that need to be monitored and the maximum value of the number of non-overlapping control channel elements in the physical downlink control channel candidates that need to be monitored.

**11.** A communication method, comprising:

receiving, by an access network device, first indication information from a terminal device, wherein the first indication information indicates one or two solutions, supported by the terminal device, in a first solution and a second solution; and
separately determining, by the access network device, configurations of search space sets of the first cell and the second cell based on the first solution or the second solution, wherein
both the first solution and the second solution are used to: when the first cell and the second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored;
both the first solution and the second solution are used to: when the first cell and the second cell jointly schedule the first cell, determine at least one of a maximum value of a number of physical downlink control channel candidates that need to be monitored by the terminal device and a maximum value of a number of non-overlapping control channel elements in the physical downlink control channel candidates that need to be monitored;
the first solution comprises: a first parameter and a second parameter are preset in a protocol;
the second solution comprises: a first parameter and a second parameter are allowed to be configured by the access network device; or the second solution comprises: a first parameter and a second parameter are preset in a protocol, the first parameter preset in the second solution is different from the first parameter preset in the first solution, and/or the second parameter preset in the second solution is different from the second parameter preset in the first solution;
the first parameter and the second parameter are used to determine a first total number, a third total number, a second total number, and a fourth total number;
a first total number and a third total number that correspond to the first solution, and a first total number and a third total number that correspond to the second solution both meet any one of the following:

the first total number is a maximum value, in a time unit corresponding to a first subcarrier spacing, of a sum of a number of physical downlink control channel candidates that need to be monitored by the terminal device in all scheduling cells in which a subcarrier spacing of an active downlink bandwidth part is the first subcarrier spacing and a number of physical downlink control channel candidates that are used to schedule the first cell and that need to be monitored by the terminal device in the second cell; and the third total number is a maximum value, in a time unit corresponding to the first subcarrier spacing, of a sum of a number of non-overlapping control channel elements in the physical downlink control channel candidates that need to be monitored by the terminal device in all the scheduling cells in which a subcarrier spacing of an active downlink bandwidth part is the first subcarrier spacing and a number of non-overlapping control channel elements in the physical downlink control channel candidates that are used to schedule the first cell and that need to be monitored by the terminal device in the second cell; or
the first total number is a maximum value, in a time unit corresponding to the first subcarrier spacing, of a number of physical downlink control channel candidates that need to be monitored by the terminal device in all scheduling cells in which a subcarrier spacing of an active downlink bandwidth part is the first subcarrier spacing; and the third total number is a maximum value, in a time unit corresponding to the first subcarrier spacing, of a number of non-overlapping control channel elements in the physical downlink control channel candidates that need to be monitored by the terminal device in all the scheduling cells in which a subcarrier spacing of an active downlink bandwidth part is the first subcarrier spacing; and
a second total number and a fourth total number that correspond to the first solution, and a second total number and a fourth total number that correspond to the second solution both meet any one of the following:

the second total number is a maximum value, in a time unit corresponding to a second subcarrier spacing, of a number of physical downlink control channel candidates, other than a physical downlink control channel candidate that is used to schedule the first cell and that needs to be monitored by the terminal device in the second cell, that need to be monitored by the terminal device in all scheduling cells in which a subcarrier spacing of an active downlink bandwidth part is the second subcarrier spacing;

and the fourth total number is a maximum value, in a time unit corresponding to the second subcarrier spacing, of a number of non-overlapping control channel elements, other than a non-overlapping control channel element in the physical downlink control channel candidate that is used to schedule the first cell and that needs to be monitored by the terminal device in the second cell, in the physical downlink control channel candidates that need to be monitored by the terminal device in all the scheduling cells in which a subcarrier spacing of an active downlink bandwidth part is the second subcarrier spacing; or the second total number is a maximum value, in a time unit corresponding to the second subcarrier spacing, of a number of physical downlink control channel candidates that need to be monitored by the terminal device in all scheduling cells in which a subcarrier spacing of an active downlink bandwidth part is the second subcarrier spacing; and the fourth total number is a maximum value, in a time unit corresponding to the second subcarrier spacing, of a number of non-overlapping control channel elements in the physical downlink control channel candidates that need to be monitored by the terminal device in all the scheduling cells in which a subcarrier spacing of an active downlink bandwidth part is the second subcarrier spacing, wherein

a subcarrier spacing of the first cell is equal to the first subcarrier spacing, and a subcarrier spacing of the second cell is equal to the second subcarrier spacing.

12. The method according to claim 11, wherein the first solution further comprises at least one of the following:

a maximum value, in a time unit corresponding to the second subcarrier spacing, of a number of physical downlink control channel candidates that are used to schedule the first cell and that need to be monitored by the terminal device in the second cell is determined based on a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell is not determined based on a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of physical downlink control channel candidates that are used to schedule the first cell and that need to be monitored by the terminal device in the second cell may be greater than a first number, wherein the first number is a preset maximum value of a number of physical downlink control channel candidates that need to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is determined based on a second number, wherein the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell is not determined based on a second number, wherein the second number is a preset maximum value of a number of non-overlapping control channel elements in the physical downlink control channel candidate that needs to be monitored in the time unit corresponding to the second subcarrier spacing;

a maximum value, in a time unit corresponding to the second subcarrier spacing, of a number of non-overlapping control channel elements in a physical downlink control channel candidate that needs to be monitored by the terminal device in the second cell may be greater than a second number, wherein the second number is a preset maximum value of a number of non-overlapping control channel elements in the physical downlink control channel candidate that needs to be monitored in the time unit corresponding to the second subcarrier spacing;

all search spaces in the second cell that is used to schedule the first cell are configured within three consecutive symbols of a time unit corresponding to the first subcarrier spacing;

all search spaces in the first cell and the second cell that are used to schedule the first cell are configured within three consecutive symbols of a time unit corresponding to the first subcarrier spacing; or

all search spaces in the second cell that is used to schedule the first cell are configured within three consecutive symbols of a time unit corresponding to the second subcarrier spacing.

13. The method according to claim 11 or 12, wherein the second solution further comprises at least one of the following:

the maximum value, in the time unit corresponding to the second subcarrier spacing, of the number of physical downlink control channel candidates that are used to schedule the first cell and that need to be monitored by the terminal device in the second cell is determined based on the first number and the second total number, wherein the first number is the preset maximum value of the number of physical downlink control channel candidates that need to be monitored in the time unit corresponding to the second subcarrier spacing; or the maximum value, in the time unit corresponding to the second subcarrier spacing, of the number of non-overlapping control channel elements in the physical downlink control channel candidate that needs to be monitored by the terminal device in the second cell is determined based on the second number and the fourth total number, wherein the second number is the preset maximum value of the number of non-overlapping control channel elements in the physical downlink control channel candidate that needs to be monitored in the time unit corresponding to the second subcarrier spacing.

14. The method according to any one of claims 11 to 13, wherein in the first solution, a preset value of the first parameter is 1, and a preset value of the second parameter is 0.

15. The method according to any one of claims 11 to 14, wherein the method further comprises:
sending, by the access network device, third indication information to the terminal device, wherein the third indication information indicates at least one of a value of the first parameter and a value of the second parameter in the second solution.

16. The method according to any one of claims 11 to 15, wherein a sum of the value of the first parameter and the value of the second parameter is 1 in the second solution.

17. The method according to any one of claims 11 to 16, wherein

a maximum value, in a time unit corresponding to the first subcarrier spacing, of a number of physical downlink control channel candidates that are used to schedule the first cell and that need to be monitored by the terminal device in the first cell is obtained by multiplying a minimum value of a third number and the first total number by a third parameter, wherein the third number is a preset maximum value of a number of physical downlink control channel candidates that need to be monitored in the time unit corresponding to the first subcarrier spacing, and the third parameter is allowed to be configured by the access network device; and
a maximum value, in a time unit corresponding to the first subcarrier spacing, of a number of non-overlapping control channel elements in the physical downlink control channel candidates that are used to schedule the first cell and that need to be monitored by the terminal device in the first cell is obtained by multiplying a minimum value of a fourth number and the second total number by the third parameter, wherein the fourth number is a preset maximum value of a number of non-overlapping control channel elements in the physical downlink control channel candidates that need to be monitored in the time unit corresponding to the first subcarrier spacing.

18. The method according to any one of claims 11 to 17, wherein

a maximum value, in a time unit corresponding to the first subcarrier spacing, of a number of physical downlink control channel candidates that are used to schedule the first cell and that need to be monitored by the terminal device in the second cell is obtained by multiplying a minimum value of the third number and the first total number by a difference between 1 and the third parameter, wherein the third number is the preset maximum value of the number of physical downlink control channel candidates that need to be monitored in the time unit corresponding to the first subcarrier spacing, and the third parameter is allowed to be configured by the access network device; and
a maximum value, in a time unit corresponding to the first subcarrier spacing, of a number of non-overlapping control channel elements in the physical downlink control channel candidates that are used to schedule the first cell and that need to be monitored by the terminal device in the second cell is obtained by multiplying a minimum value of the fourth number and the second total number by the difference between 1 and the third parameter, wherein the fourth number is the preset maximum value of the number of non-overlapping control channel elements in the physical downlink control channel candidates that need to be monitored in the time unit corresponding to the first subcarrier spacing.

19. The method according to any one of claims 11 to 18, wherein the method further comprises:
sending, by the access network device, second indication information to the terminal device, wherein the second indication information indicates to use the first solution or the second solution.

20. A communication apparatus, comprising a unit configured to perform the method according to any one of claims 1 to 10.

21. A communication apparatus, comprising a processor and a memory, wherein the processor is coupled to the memory, the memory stores computer instructions, and the processor reads the computer instructions to implement the method according to any one of claims 1 to 10.

22. A communication apparatus, comprising a unit configured to perform the method according to any one of claims 11 to 19.

23. A communication apparatus, comprising a processor and a memory, wherein the processor is coupled to the memory, the memory stores computer instructions, and the processor reads the computer instructions to implement the method according to any one of claims 11 to 19.

24. A computer-readable storage medium, wherein the storage medium stores a computer program or instructions, and when the computer program or the instructions are run on a computer, the method according to any one of claims 1 to 10 is implemented, or the method according to any one of claims 11 to 19 is implemented.

25. A computer program product, comprising a computer program or instructions, wherein when the computer program or the instructions are run on a computer, the method according to any one of claims 1 to 10 is implemented, or the method according to any one of claims 11 to 19 is implemented.

Terminal device
Access network device

FIG. 1

| Access network device | Terminal device |
|---|---|

S201: The terminal device determines first indication information

S202: The terminal device sends the first indication information to the access network device

First indication information

S203: The access network device receives the first indication information from the terminal device

S204: The access network device sends second indication information to the terminal device

Second indication information

S205: The access network device separately determines configurations of search space sets of a first cell and a second cell based on a first solution or a second solution

S206: The access network device sends third indication information to the terminal device

Third indication information

S207: The terminal device determines at least one of a maximum value of a number of PDCCH candidates that need to be monitored and a maximum value of a number of non-overlapping CCEs in the PDCCH candidates that need to be monitored

FIG. 2

Communication apparatus 300

Processing unit ⟩ 301

Communication unit ⟩ 302

FIG. 3

Communication apparatus 400

| Processor 410 | Interface circuit 420 |

⇕ ⇕

⇕

Memory 430

FIG. 4

S501: A terminal device determines, based on a first solution or a second solution, at least one of a maximum value of a number of PDCCH candidates that need to be monitored and a maximum value of a number of non-overlapping CCEs in the PDCCH candidates that need to be monitored

S502: An access network device separately determines configurations of search space sets of a first cell and a second cell based on the first solution or the second solution

FIG. 5

## INTERNATIONAL SEARCH REPORT

| International application No. |
| --- |
| **PCT/CN2022/130028** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 载波聚合, 盲检, 调度, 主小区, 辅小区, 监测, 候选, 重叠, 子载波间隔, 带宽, PDCCH 候选, CA, blind w detection, schedul+, primary w cell, secondary w cell, monitor+, candidate, overlap, subcarrier w spacing, bandwidth, PDCCH, CCE, PCell, SCell

**C. DOCUMENTS CONSIDERED TO BE RELEVANT**

| Category* | Citation of document, with indication, where appropriate, of the relevant passages | Relevant to claim No. |
| --- | --- | --- |
| A | CN 113518343 A (VIVO COMMUNICATION TECHNOLOGY CO., LTD.) 19 October 2021 (2021-10-19) description, paragraphs [0029]-[0058] | 1-25 |
| A | CN 111901869 A (ZTE CORP.) 06 November 2020 (2020-11-06) entire document | 1-25 |
| A | CN 110830216 A (HUAWEI TECHNOLOGIES CO., LTD.) 21 February 2020 (2020-02-21) entire document | 1-25 |
| A | WO 2021151382 A1 (QUALCOMM INC.) 05 August 2021 (2021-08-05) entire document | 1-25 |
| A | VIVO. "Remaining issues on cross-carrier scheduling with mix numerologies" *3GPP TSG-RAN WG1 Meeting #100, R1-2000350*, 06 March 2020 (2020-03-06), entire document | 1-25 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 January 2023** | **28 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/130028**

| Patent document cited in search report | | | Publication date (day/month/year) | Patent family member(s) | | | Publication date (day/month/year) |
|---|---|---|---|---|---|---|---|
| CN | 113518343 | A | 19 October 2021 | WO | 2021204242 | A1 | 14 October 2021 |
| CN | 111901869 | A | 06 November 2020 | WO | 2021160011 | A1 | 19 August 2021 |
| CN | 110830216 | A | 21 February 2020 | WO | 2020029945 | A1 | 13 February 2020 |
| WO | 2021151382 | A1 | 05 August 2021 | WO | 2021151224 | A1 | 05 August 2021 |
| | | | | CN | 115053613 | A | 13 September 2022 |
| | | | | EP | 4098058 | A1 | 07 December 2022 |

Form PCT/ISA/210 (patent family annex) (January 2015)

**REFERENCES CITED IN THE DESCRIPTION**

**Patent documents cited in the description**

- CN 202111308863

- CN 202111358112